# EUROPÄISCHE PATENTSCHRIFT

(11) **EP 3 324 728 B1**
(45) Veröffentlichungstag und Bekanntmachung des Hinweises auf die Patenterteilung: **22.05.2019**
(21) Anmeldenummer: 16756566.2
(22) Anmeldetag: 15.07.2016
(51) Int. Cl.: A01D 46/24, A01D 46/30

(54) **PFLÜCKWAGENSYSTEM ZUR MECHANISIERUNG DER OBSTERNTE MIT EINEM EINE UNTERFAHRGASSE AUFWEISENDEN PFLÜCKWAGEN**
PICKING TRUCK SYSTEM FOR MECHANISATION OF FRUIT HARVESTING BY MEANS OF A PICKING TRUCK HAVING AN UNDERRUN PASSAGE
SYSTÈME DE VOITURE DE CUEILLETTE POUR MÉCANISER LA RÉCOLTE DE FRUITS, COMPRENANT UNE VOITURE DE CUEILLETTE QUI PRÉSENTE UN CHEMIN DE PASSAGE INFÉRIEUR

(30) Priorität: 17.07.2015 DE 102015111665; 17.07.2015 DE 102015111682
(43) Veröffentlichungstag der Anmeldung: 30.05.2018
(73) Patentinhaber: Spies, Klaus, 52076 Aachen (DE)
(72) Erfinder: Spies, Klaus, 52076 Aachen (DE)
(74) Vertreter: Osterhoff, Utz
(86) Internationale Anmeldenummer: PCT/DE2016/000275
(87) Internationale Veröffentlichungsnummer: WO 2017/012604

(56) Entgegenhaltungen:
- DE-U1-202011 107 841
- NL-A- 7 210 766
- US-A1- 2015 173 296

## Beschreibung

Die vorliegende Erfindung betrifft eine Pflückwagensystemanordnung zum Einsatz in der Obsternte gemäß den Merkmalen im Oberbegriff von Patentanspruch 1.

Die ständig steigenden Kosten für die saisonalen Landarbeiter machen es erforderlich, nicht nur an der Automatisierung des gesamten Erntegeschehens zu arbeiten, sondern darüber hinaus auch Maschinen und technische Einrichtungen zu entwickeln, mit denen die Effizienz der Pflücker dadurch gesteigert werden kann, dass sie von den sog. Nebenarbeiten befreit werden. Das gilt vor allen Dingen für sämtliche Vorgänge vom Augenblick des Lösens der Frucht vom Baum bis zum Einbringen in die Transportkisten, möglichst unter Einbeziehung der Transportkistenlogistik bis zum Obsthof.

Hier sind bisher recht unterschiedliche Methoden verbreitet. Die gebräuchlichste besteht darin, dass die Pflücker das zu erntende Obst in Kästen mit einem abklappbaren Boden legen. Ist ein solcher Kasten voll, tragen sie ihn zur Transportkiste, die in Deutschland - ausgehend von den Abmessungen der Normpalette - genormt ist und bei der Apfelernte 300 kg und ca. 2000 Äpfel fasst. Die Abmessungen sind 1 m x 1,2 m x 0,8 m. Um ein schonendes Einfüllen in die Transportkiste zu erreichen, wird der Pflückkasten auf den Boden der Transportkiste oder auf die bereits eingefüllten Äpfel gestellt, die Arretierung des Pflückkastenbodens gelöst und der Kasten langsam angehoben, so dass das gepflückte Obst über eine am Boden des Pflückkastens angebrachte schlauchförmige Schürze schonend in die Transportkiste rollen kann. Ein freier Fall der Äpfel - auch über geringe Entfernungen hinweg - muss absolut ausgeschlossen werden. Das ist eine grundsätzliche Anforderung an alle für den vorerwähnten Zweck zu entwickelnden Hilfsgeräte.

Die vorbeschriebene Methode wird hauptsächlich für das Pflücken im unteren Bereich der strauchartigen Baumreihen angewandt. Für den oberen Bereich gibt es von Traktoren gezogene Hubbühnen, auf denen die Pflücker stehen und auf beiden Seiten der Gasse zwischen den Baumreihen die pflückreifen Früchte ernten. Eine Weiterentwicklung sind selbstfahrende Hubbühnen, die automatisch mit Schleichgeschwindigkeit durch die Gassen fahren, wobei auf beiden Seiten angeordnete Sensoren das Einhalten der Richtung gewährleisten. Die Fahrgeschwindigkeit entspricht der Pflückgeschwindigkeit.

An beiden Enden dieser Hubbühnen sind Ausleger angeordnet, mit denen die leeren Transportkisten auf die Hubbühnen gehoben und die befüllten Transportkisten wieder auf Bodenniveau abgesenkt oder auf Transportwagen übergeben werden. Dadurch, dass sich mehrere befüllte Transportkisten relativ hoch über dem Bodenniveau befinden, müssen die fahrbaren Hubbühnen sehr stabil und damit auch kostenaufwendig gebaut werden. Ein besonderer Nachteil besteht darin, dass beim Ernten zwei unterschiedliche Methoden angewandt werden müssen, die herkömmliche Methode für das Ernten im unteren Bereich und das Pflücken mit Hubwagen für das Ernten im oberen Bereich. Eine weitere mechanisierte Pflückhilfe ist bekannt, bei welcher die einzelnen Pflücker das geerntete Obst auf schwenkbare kleine Förderer legen, welche ihre Fracht auf ein Sammelband überführen, das dann anschließend in die Transportkiste übergibt. Abgesehen davon, dass die Maschine durch die Vielzahl der Förderer sehr kompliziert und damit im rauen Erntebetrieb störanfällig ist, sind Aufwand und Kosten außerordentlich hoch, so dass sich dieses Prinzip bis jetzt nicht durchsetzen konnte.

Aus der NL 7210766 A ist ein Pflückwagensystem zur Obsternte bekannt, wobei der Pflückwagen ein fahrbares Gestell aufweist, auf dem ein Förderband montiert ist und geerntetes Obstgut mit dem Förderband zu einer Sammelstelle gefördert wird.

Ausgehend von diesem Stand der Technik ist es Aufgabe der vorliegenden Erfindung, ein Pflückwagensystem bereitzustellen, dass sich für die Obsternte, insbesondere Apfelernte eignet und dabei gezogen werden kann als auch selbstfahrend ausgebildet sein kann, einen konstruktiv einfachen und ausfallsicheren sowie robusten Aufbau besitzt, wobei die Ernteleistung durch den Pflückwagen gesteigert wird.

Die zuvor genannte Aufgabe wird erfindungsgemäß mit einem Pflückwagensystem zur Obsternte, insbesondere zur Apfelernte, gemäß den Merkmalen im Patentanspruch 1 gelöst.

Vorteilhafte Ausgestaltungsvarianten dieses Pflückwagensystems sind in den abhängigen Patentansprüchen beschrieben.

Das Pflückwagensystem ist zur Obsternte vorgesehen, insbesondere Apfelernte, wobei der Pflückwagen ein fahrbares Gestell aufweist, auf dem ein Förderband montiert ist und geerntetes Obstgut mit dem Förderband zu einer Sammelstelle gefördert wird. Es zeichnet sich dadurch aus, dass unterhalb des Pflückwagens eine Durchfahrgasse ausgebildet ist, wobei in der Durchfahrgasse ein Straßentransportwagen angeordnet ist und auf dem Straßentransportwagen Sammelkisten angeordnet sind, wobei das Obstgut von dem Förderband in die Sammelkisten gefördert wird.

Der erfindungswesentliche Vorteil ist in der Durchfahrgasse des Pflückwagens zu sehen. In der Durchfahrgasse kann ein Straßentransportwagen angeordnet werden und insbesondere mit dem Pflückwagen gekoppelt werden. Das geernetete Obstgut, insbesondere die geerneten Äpfel, werden dann von einem Förderband an eine Sammelstelle, insbesondere einen Vertikalförderer geführt und von diesem Vertikalförderer direkt in die Sammelkisten auf dem Straßentransportwagen abgelegt. Ist die Sammelkiste gefüllt, kann der gesamte Straßentransportwagen um die Länge einer Sammelkiste relativ zu dem Pflückwagen verschoben werden. Der Vertikalförderer kann dann wiederum in eine neue Sammelkiste fördern. Die Durchfahrgasse kann dabei derart groß ausgebildet sein, dass ein Straßentransportwagen mit aufgesetzten Sammelkisten darin angeordnet werden kann. Die Durchfahrgasse ist derart ausgebildet, dass ein in der Obsternte eingesetzter Traktor, insbesondere Minitraktor vollständig hindurchfahren kann. Die Durchfahrgasse kann dabei statisch ausgebildet sein. Auch kann jedoch das Gestell des Pflückwagens derart ausgebildet sein, dass dieses angehoben werden kann, so dass die Durchfahrgasse temporär zur Durchfahrt eines Traktors ausgebildet ist.

Der Pflückwagen zur Obsternte, insbesondere zur Apfelernte weist ein fahrbares Gestell auf, auf dem ein Förderband montiert ist und geerntetes Obstgut, insbesondere geerntete Äpfel, mit dem Förderband zu einer Sammelstelle gefördert werden. Das fahrbare Gestell kann dabei entweder nach dem Prinzip eines Anhängers bzw. Trailers ausgebildet sein. Das fahrbare Gestell kann jedoch auch selbstfahrend sein, so dass Antriebseinheiten an dem Gestell angeordnet sind.

Das Förderband kann aus einer Kunststoffplane ausgebildet sein. Auf der Kunststoffplane können in einem Winkel, insbesondere quer zur Förderrichtung des Förderbandes Bürstenleisten in vorgegebenen Abständen angeordnet sind. Alternativ oder ergänzend zeichnet sich der Pflückwagen erfindungsgemäß dadurch aus, dass seitlich des Förderbandes mindestens eine Sammelplatte in einem Winkel zum Förderband angeordnet ist, wobei auf der Sammelplatte Bürstenleisten angeordnet sind, die eine zielgerechte und/oder verlangsamende Lenkung des auf der Sammelplatte abgelegten Obstes in Richtung zu dem Förderband vornehmen. Anstelle der Bürstenleisten können auch Leitmittel, beispielsweise Leitschienen verwendet werden.

Der erfindungswesentliche Vorteil des Pflückwagens ist, dass dieser aus einem einfachen, zugleich jedoch robusten Strebengestell ausgebildet ist. Dabei kann es sich um ein Leichtmetallgestell, insbesondere als Rohrkonstruktion handeln, jedoch auch um ein Gestell aus einer Stahllegierung. Vorteilhaft kann auch ein Gestell aus Leichtmetallprofilen bzw. zu einer Konstruktion mit hohem Widerstandsmoment gebrachtem und bevorzugt vernietetem Aluminiumblech gefertigt sein. Dies ermöglicht derartige konstruktive Freiheitsgrade, dass beispielsweise Pflückwagen in voneinander verschiedenen Längen und/oder Breiten hergestellt werden können, je nach Einsatzgebiet des zu erntenden Obstgutes und der Region, in der das Obst geerntet wird.

Ferner weist der Pflückwagen bevorzugt ein höhenverstellbares Gestell auf. Insbesondere ist dies als Scherenmechanik ausgebildet. Hierdurch ist es möglich, den Pflückwagen, insbesondere das auf dem Pflückwagen befindliche Sammel- und Transportband, in Vertikalrichtung bezogen in der Höhe anzuheben oder abzusenken. Auch können Aktoren in Vertikalrichtung die Anhebefunktion vornehmen.

Ein weiterer erfindungswesentlicher Vorteil liegt in dem Förderband, auch Sammel- und Transportband genannt. Dieses Förderband wird aus einer Kunststoffplane hergestellt. Diese bietet den Vorteil, dass sie leicht verarbeitet werden kann und somit individuell an die Bedürfnisse eines jeden hergestellten Pflückwagens angepasst werden kann. Darüber hinaus ist es jedoch möglich, bei einer Beschädigung der Kunststoffplane diese insbesondere vor Ort einfach zu reparieren und/oder kostengünstig auszutauschen.

In einfachster Ausgestaltungsvariante verläuft das Förderband in horizontaler Richtung auf dem Pflückwagen. Da jedoch Unebenheiten, beispielsweise auch Hanglangen in den Obsterntegebieten zu verzeichnen sind, würde es somit zu einer Abwinkelung der Förderrichtung gegenüber einer Horizontalen kommen. Beispielweise bei der Apfelernte kann es somit passieren, dass die Äpfel auf dem Förderband in Richtung zu der Hanglange beginnen zu rollen und nicht mehr entsprechend gefördert werden. Damit hier eine konsequente stetige Förderung gegeben ist, sind in vorgegebenen Abständen Bürstenleisten angeordnet. Bei den Bürsten kann es sich insbesondere um Kunststoffborsten handeln, die jedoch flexibel sind. Insbesondere sind die Bürsten elastisch verformbar. Die einzelnen Bürstenleisten sind in einem Winkel, insbesondere quer zur Förderrichtung auf dem Förderband angeordnet.

Die Borsten der Bürstenleiste sind bevorzugt 5 bis 15 cm, insbesondere 8 bis 12 cm und ganz besonders bevorzugt 9 bis 11 cm gegenüber der Oberfläche des Förderbandes überstehend. Das auf das Förderband abgelegte Obst wird somit spätestens bei Anlage an einer Bürstenleiste in Förderrichtung abtransportiert. Hierzu erstrecken sich die Bürstenleisten im Wesentlichen über die Breite des Förderbandes.

Damit eine weitere Steigerung der Effizienz bei der Ernte zu verzeichnen ist, sieht die Erfindung vor, dass seitlich des Förderbandes an dem Gestell des Pflückwagens mindestens eine Sammelplatte in einem Winkel - in Querschnittsansicht - zum Förderband angeordnet ist. Besonders bevorzugt ist auf jeder Seite des Pflückwagens mindestens eine Sammelplatte angeordnet, in besonders bevorzugter Ausgestaltungsvariante sind auf jeder Seite des Pflückwagens mindestens zwei Sammelplatten angeordnet.

Bei der Sammelplatte handelt es sich wiederum in besonders bevorzugter Ausgestaltungsvariante um eine ebene Platte, beispielsweise aus einem Leichtmetall. Die Platte kann jedoch auch aus einem Kunststoff oder aber aus einer Stahllegierung aus Stahlwerkstoff ausgebildet sein. Besonders bevorzugt kommt auch ein faserverstärkter Kunststoff zum Einsatz. Diese Sammelplatte bietet den Vorteil, dass sie im Bereich der Arbeitsposition eines Pflückers angeordnet ist. Der Pflücker kann sich somit ausschließlich auf das zu erntende Obstgut, insbesondere die zu erntenden Äpfel konzentrieren. Dies ist wichtig in Bezug auf das Erkennen der Größe, Form und Pflückreife des zu erntenden Obstgutes. Nach erfolgter Pflückung kann der Pflücker, ohne Änderung der Blickrichtung und insbesondere ohne Drehbewegung des Oberkörpers das geerntete Obstgut, insbesondere die geernteten Äpfel auf der Sammelplatte seitlich seines Oberkörpers bzw. schräg hinter seinem Oberkörper ablegen. Er muss keinen Blickwechsel auf den Ablegeort vornehmen.

Damit nunmehr das abgelegte Obst bzw. die abgelegten Äpfel auf der Sammelplatte nicht unkontrolliert abrollen, zu schnell abrollen oder gar auf den Boden fallen, sind wiederum Bürstenleisten auf der Sammelplatte festgelegt, die eine zielgerichtete Lenkung des auf der Sammelplatte abgelegten Obstes in Richtung zu dem Förderband vornehmen. Insbesondere sind die Bürstenleisten derart relativ zueinander positioniert, dass sie in Draufsicht auf die Sammelplatte von einer linken und rechten Seite trichterförmig das abgelegte Obst in eine Mitte der Sammelplatte lenken und von diesem mittigen dann unteren Punkt der Sammelplatte das Obst auf das Förderband übergeleitet wird.

Weiterhin sind die Bürstenleisten derart angeordnet, dass sie das auf der Sammelplatte abgelegte Obst nicht unmittelbar auf das Förderband rollen lassen, sondern zunächst durch eine Bewegung in einem Winkel zur Förderrichtung das abgelegte Obst in der Rollbewegung verlangsamen. Hierdurch wird eine Beschädigung des Obstgutes durch zu schnelles Aufeinander prallen und/oder Anprallen auf das Förderband vermieden. Somit ergibt sich eine höhere Pflückleistung, da weniger Bewegungen des Pflückers betreffend des Ablegens des Obstgutes vorzunehmen sind und gleichzeitig ein geringerer Ausschuss aufgrund angeprallten bzw. beschädigten Erntegutes vorhanden ist.

Bei dem Förderband handelt es sich insbesondere um eine Kunststoffplane. Es handelt sich dabei um eine kunststoffbasierte Plane, die auch ein Armierungsgewebe, insbesondere eine Faserverstärkungsschicht aufweisen kann. Bevorzugt weist die Plane des Förderbandes eine Dicke zwischen 0,5 und 5 mm, insbesondere zwischen 1 und 3 mm, ganz besonders bevorzugt zwischen 1,2 und 2,5 mm auf. Besonders bevorzugt ist eine Kunststoffplane mit einer Dichte zwischen 800 und 1000 g/m², insbesondere 850 bis 950 g/m² und ganz besonders bevorzugt von 900 g/m² verwendet. Zur zusätzlichen Verstärkung ist weiterhin besonders bevorzugt seitlich an der jeweiligen Unterseite der Kunststoffplane ein Gurtband angeordnet. Insbesondere wird ein Gurtband verwendet, welches eine Zugfestigkeit von 1 bis 3 kN/m², insbesondere 2 kN/m² aufweist. Das Gurtband kann mit der Kunststoffplane verklebt, insbesondere verschweißt sein. Die eingebrachten Ösen können bevorzugt das Gurtband und die Kunststoffplane durchgreifen.

Ein weiterer Vorteil der Erfindung liegt in der Funktionstrennung des Sammel- und Transportbandes. Hierzu ist das Sammel- und Transportband, welches zunächst ausschließlich aus der Kunststoffplane mit den Bürstenleisten ausgebildet ist, in dem Gestell freihängend aufgehangen. Ein in dem Gestell umlaufendes Zugband ist über Koppelglieder mit dem Sammel- und Transportband verbunden. Die Koppelglieder erstrecken sich insbesondere quer zur Förderrichtung. Bevorzugt ist auf jeder Seite der Kunststoffplane ein Zugband angeordnet, so dass die Kunststoffplane zwischen den beiden Zugbändern über die Koppelglieder eingehängt ist. Wird nunmehr der Pflückwagen in Betrieb genommen, wird über das Zugband, welches insbesondere beidseitig angeordnet ist, eine Zugkraft in Förderrichtung aufgebracht. Das Zugband selbst ist dabei bevorzugt aus einem Kunststoffband oder aber auch einem umlaufenden Gummiband ausgebildet. Das Zugband kann jedoch auch aus einem Drahtseil oder einem Naturfaserwerkstoff ausgebildet sein. Das Zugband kann auch als Kette ausgebildet sein. Über die Koppelglieder ist dann zum einen die Kunststoffplane des Sammel- und Transportbandes an dem Zugband aufgehangen. Durch Aufbringen einer Zugkraft wird dann die Kunststoffplane in Förderrichtung in Bewegung gesetzt. Die Koppelglieder sind insbesondere als eine Zugkraft übertragende Bänder ausgebildet. Beispielsweise können hier Gummibänder eingesetzt werden, an deren Ende ein Haken oder ein Quersteg angeordnet ist, so dass diese in die Ösen des Sammel- und Transportbandes bzw. der Kunststoffplane eingehängt werden können. Bei einem Defekt oder aber zur Wartung ist es somit möglich, innerhalb kürzester Zeit das Sammel- und Transportband zu wechseln.

Die Bürstenleisten sind nunmehr auf der Kunststoffplane derart befestigt, dass am unteren Fußende der Bürstenleisten eine Schiene, insbesondere eine Kunststoffschiene, ausgebildet ist. Diese Schiene kann auch aus Leichtmetall ausgebildet sein. Mittels dieser Schiene ist die Bürstenleiste dann auf die Kunststoffplane aufgesetzt. Bevorzugt kann die Bürstenleiste formschlüssig mit der Kunststoffplane gekoppelt sein. Insbesondere wird ein Gegenstück auf der gegenüberliegenden Seite der Kunststoffplane aufgesetzt und dann die Kunststoffplane durchgreifend mit der Schiene der Bürstenleiste formschlüssig vernietet oder verschraubt. Auch ist es im Rahmen der Erfindung vorstellbar, dass die Leisten aus Leichtmetall ausgebildet sind. Im Sinne der Erfindung wäre es auch vorstellbar, dass die Bürstenleiste auf die Kunststoffplane aufgeklebt ist.

Die Kunststoffplane weist weiterhin eine gewisse Eigendehnung bzw. Verformung auf. Dies bietet insbesondere den Vorteil, dass bei auf der Kunststoffplane abgelegtem Obstgut in Verbindung mit der Erdanziehungskraft das Obstgut die Kunststoffplane im Querschnitt in einem mittigen Bereich zu einem Durchhängen verleitet. Auch kann diese in Verbindung mit dem Obstgut als bauchig bezeichnet werden. Hierdurch wird sichergestellt, dass das geerntete Obst nicht seitlich von dem Förderband abrollt. Es rollt somit immer zentral gerichtet zur Mitte des Förderbandes und wird dann in Förderrichtung abtransportiert.

Um die Kunststoffplane in dem Gestell zu befestigen, ist besonders bevorzugt eine umlaufende Führung für das Förderband angeordnet. Diese Führung kann beispielsweise eine Rollenführung oder auch eine Kederführung sein. In dieser Rollenführung oder Kederführung ist dann ein umlaufendes Zugband, insbesondere ein Kederband, angeordnet. Dies kann auch ein Kunststoffband sein, es kann sich jedoch auch um ein metallisches Band, beispielsweise um ein Drahtseil, handeln. Auch ist es vorstellbar, dass eine entsprechende Förderkette eingesetzt wird.

Von diesem Band erstrecken sich dann wiederum in Horizontalrichtung, insbesondere quer zur Förderrichtung, Koppelglieder. Diese können aus Kunststoff, jedoch auch aus metallischem Werkstoff oder auch aus natürlichem Werkstoff, beispielsweise Naturfasern, ausgebildet sein. Am Ende der Koppelglieder ist beispielsweise ein Haken angeordnet, welche seitlich in das Förderband, bevorzugt in Ösen des Förderbandes eingehakt werden. Hierzu ist das Förderband an seiner seitlichen Seitenfläche mindestens einmal umgeschlagen. In diesem umgeschlagenen doppellagigen Bereich sind in Abständen zueinander Ösen eingebracht, in welche die Koppelglieder eingehakt werden. Somit ist das Förderband im mittigen Bereich des Pflückwagens freihängend ausgebildet und wird aufgrund einer Kraftübertragung, beispielsweise auf das umlaufende Zugband oder aber auch einer Kraftübertragung direkt auf das Förderband derart in Bewegung versetzt, dass die Förderbewegung ausgeführt wird.

Damit das im Querschnitt gewölbte bzw. bauchige Förderband diese Position nicht nur bei abgelegtem Fördergut aufweist, ist weiterhin vorgesehen, dass an der jeweils sich ergebenden Unterseite des Förderbandes eine mittige Rollenführung angeordnet ist, so dass sich das Förderband von beiden seitlichen Seitenflächen her zur Mitte absenkt. Insbesondere bei einem Obergurt bzw. Obertrum des Förderbandes wird somit sichergestellt, dass das abgelegte Obstgut auf dem Förderband zu einem mittigen Bereich hin rollt.

Damit nunmehr das geerntete und auf dem Förderband abgelegte Obst zentral gesammelt wird und logistisch einfach abtransportierbar ist, ist weiterhin vorgesehen dass an einem Ende des Pflückwagens eine Sammelkiste vorgesehen ist. Diese steht auf einem in der Durchfahrgasse angeordneten Straßentransportwagen. Damit nunmehr das Obst jedoch nicht an einem Umlenkpunkt des Förderbandes auf die Vertikalrichtung bezogen einfach nach unten in die Sammelkiste fällt, ist es durch die erfindungsgemäße Gestaltungsfreiheit des Förderbandes mit Kunststoffplane möglich, das Förderband auf die Vertikalrichtung bezogen nach unten umzulenken, so dass das geförderte Obst in die Sammelkiste gefördert wird. Hierzu ist vorgesehen, dass ab dem Umlenkpunkt parallel verlaufend zu dem vertikalen Teil des Förderbandes eine Abdeckung vorgesehen ist. Die Abdeckung, eine jeweilige in Förderrichtung vordere und hintere Bürstenleiste sowie die Kunststoffplane bilden somit einen in Förderrichtung bewegbaren Transportraum. Die Abdeckung verhindert dabei, dass das geförderte Obstgut aus diesem Transportraum herausfällt. Somit wird nach einem Fahrstuhlprinzip bzw. das geförderte Obst wird auf die Vertikalrichtung bezogen mit der Fördergeschwindigkeit nach unten abtransportiert und kann nach Erreichen eines unteren Umlenkpunktes des vertikalen Abschnittes sanft bzw. schonend in der Sammelkiste abgelegt werden. Insbesondere kann ein Bürstenrollenauslass vorgesehen sein, welcher eine schonende Verteilung des in der Sammelkiste abzulegenden Obstes zulässt. Auch kann ein in der Höhe veränderbarer Vertikalförderer vorgesehen sein.

Da sich im Zuge des Förderns in die Sammelkiste der Füllstand in der Sammelkiste ändert, ist weiterhin vorgesehen, eine Relativbewegung zwischen Ende des Vertikalförderers bzw. Ende des Förderbandes und jeweiliger Füllstandsoberfläche der Sammelkiste vorzunehmen. Bei Einsatz eines Vertikalförderers wäre es auch vorstellbar, dass nur der Vertikalförderer auf- und abbewegt wird. Bei Ausführen einer Auf- und Abbewegung des umgelenkten Transportbandes wäre es vorstellbar ein Ende und insbesondere den umgelenkten Bereich des Transportbandes auf und ab zu bewegen, so dass auf den Füllstand der Sammelkiste reagiert werden kann. Ist die Sammelkiste gefüllt, fährt der Straßentransportwagen um die Länge einer Sammelkiste relativ zu dem Pflückwagen nach vorne. Eine leere Sammelkiste ist somit unter dem Vertikalförderer angeordnet.

Im Rahmen der Erfindung ist es auch vorstellbar, dass der Vertikalförderer eine umlaufende Kunststoffplane aufweist, wobei auf der Kunststoffplane quer zur Förderrichtung verlaufend Bürstenschienen angeordnet sind. Auf der Abförderseite, mithin auf der vertikal nach unten zu fördernden Seite des Vertikalförderers ist eine Abdeckung vorgesehen, so dass die passierenden Bürstenschienen das Förderband und die Abdeckung einen in Förderrichtung bewegbaren Raum bilden. Hierdurch ist es auch bei dem Vertikalförderer möglich, diesen in einfacher und effizienter Weise aus der Kunststoffplane mit den Bürstenschienen herzustellen, zugleich jedoch die Abförderbewegung schonend vorzunehmen, so dass das geerntete Obst nicht in die Sammelkiste fällt.

Nunmehr kommt es dazu, dass das zu erntende Obst an den Obstbäumen auf unterschiedlichen Höhen angeordnet ist, wobei der Höhenversatz nicht durch die Arme eines menschlichen Pflückers ausgeglichen werden kann. Im Rahmen der Erfindung ist es vorgesehen, dass aufgrund des einfachen und leichten Gestells des Pflückwagens der Pflückwagen in seiner Höhe verstellbar ist. Beispielsweise kann der gesamte Pflückwagen über eine Scherenmechanik oder eine sonstige teleskopierbare Aktuatorik derart ausgebildet sein, dass der gesamte Pflückwagen angehoben wird. Hierbei wird das Gestell angehoben, wobei diesem zusätzlich ein Fahrgestell zugeordnet sein kann. Das Gestell wird dann relativ in der Höhe gegenüber dem Fahrgestell angehoben. Mit dem Gestell werden dann auch gleichzeitig das Förderband sowie die Pflückplattformen angehoben. Beispielsweise kann zunächst ein Durchgang zum Ernten auf einer niedrigeren Höhe gefahren werden und dann ein zweiter Durchgang auf einer demgegenüber höheren Ebene gefahren werden. Auch wäre es im Rahmen der Erfindung vorstellbar, dass nicht das gesamte Gestell angehoben wird, sondern dass die Pflückplattformen relativ zu dem Gestell in der Höhe verstellbar sind.

Letztlich ist der Pflückwagen bevorzugt als Anhänger ausgebildet. So kann ein in den meisten Obstbaubetrieben vorhandenes Zugfahrzeug, insbesondere ein Traktor verwendet werden, um den Pflückwagen zu ziehen. Der Antrieb des Förderbandes wiederum kann beispielsweise über einen elektrischen Antrieb erfolgen, wobei dann bevorzugt die Stromversorgung von dem Zugfahrzeug des Pflückwagens kommend ist. Auch kann eine mechanische Koppelung erfolgen, so dass ein Kraftantrieb des Zugfahrzeuges den Antrieb des Förderbandes an dem Pflückwagen übernimmt.

Im Rahmen der Erfindung ist es jedoch auch vorstellbar, dass der Pflückwagen selbstfahrend ausgebildet ist. Somit wird lediglich der Pflückwagen benötigt, um durch die Reihen der Obstbäume zu fahren und die entsprechende Ernte durchzuführen.

Bevorzugt wird jedoch der Pflückwagen in der Durchfahrgasse des Pflückwagens angeordneten Straßentransportwagens mitgezogen. Der Straßentransportwagen selbst wird wiederum durch einen Traktor gezogen. Der Pflückwagen ist lösbar an den Straßentransportwagen angeklemmt. Dies kann beispielsweise mittels seitlich an dem Straßentransportwagen angreifender Klemmbacken erfolgen.

Weiterhin besonders bevorzugt kann der Pflückwagen zumindest teilmechanisiert, insbesondere vollautomatisiert werden. Die Teilmechanisierung sieht dabei vor, dass der Pflückwagen selbstfahrend ist und eine entsprechende Sensorik vorhanden ist, die ein computergesteuertes Fahren ermöglicht. Der Pflückwagen muss somit allenfalls in die Reihen zwischen den Obstbäumen durch einen menschlichen Fahrzeugführer gelenkt werden, ab hier würde der Pflückwagen selbstfahrend sein, so dass die menschlichen Pflücker sich ausschließlich auf das Ernten des Obstes konzentrieren können. Auch wäre ein Wendemanöver des Pflückwagens in die parallel verlaufende Reihe zwischen den Obstbäumen vorstellbar. Dies kann auch als teilautomatischer Betrieb verstanden werden.

Unter einem vollautomatischem Betrieb ist in einer weiteren Option vorgesehen, dass dem Pflückwagen Pflückarme zugeordnet sind. hierbei handelt es sich um Aktuatorarme, die ein Greifende, beispielsweise einen Pneumatikgreifer, oder aber auch einen mechanischen Greifer mit mechanischen Greiffingern aufweisen. Durch entsprechende Sensorik, beispielsweise einen video- oder kammerbasierten Sensor der das zu erntende Obst erfasst und auch in seiner Pflückreife sowie Pflückposition definiert, wird ein entsprechender Steuerungsbefehl an die Pflückarme ausgegeben, so dass das Obst ergriffen wird, beispielsweise im Falle eines Apfels eine entsprechende Abknickbewegung ausgeführt wird, um den Apfel vom Obstbaum zu trennen und den Stiel des Apfels zu erhalten und sodann der geerntete Apfel auf das Förderband abgelegt wird. Hierbei wäre ein vollautomatischer Betrieb des Pflückwagens möglich, wobei allenfalls ein menschlicher Bediener auf dem Pflückwagen bei Auftreten eines Fehlers sowie ausschließlich zur Überwachung einzusetzen wäre.

Erfindungsgemäß ist nunmehr vorgesehen, dass auf dem Pflückwagen bzw. an dem Pflückwagen Pflückarme montiert sind, wobei die Pflückarme relativ beweglich zu dem Pflückwagen schwenkbar, drehbar und/oder verfahrbar sind. Die Pflückarme sind insbesondere nach dem Bewegungsprinzip eines Industrieroboters aufgebaut, insbesondere eines Sechsachsen Industrieroboters.

Zum Ausführen der Bewegungen weisen die Pflückarme bevorzugt mindestens zwei Armteile auf, die relativ über eine Schwenkbewegung miteinander koppelbar sind, wobei ein unterer Armteil drehbar und schwenkbar an dem Pflückwagen angeordnet ist.

Die Armteile selbst sind bevorzugt als leichte Rippenrohrkonstruktion mit geringer Masse ausgebildet. Dies ermöglicht eine einfache und kraftarme Bewegung der Pflückarme selbst. Insbesondere ist dies notwendig, um hohe Beschleunigungen und kurze Beschleunigungszeiten bei einer zielgerichteten Bewegung auf einen zu erntenden Apfel einhalten zu können. Erst kurz vor Erreichen des zu erntenden Apfels bremst das System dann ab und führt eine langsame und schonende Greifbewegung durch.

Insbesondere ist die Rippenrohrkonstruktion bzw. die Leichtbaukonstruktion der Pflückarme derart ausgebildet, dass ein Armteil aus parallel zueinander angeordneten Kunststoff- oder Leichtmetallprofilen bzw. Kunststoff- oder Leichtmetallrohren verwendet werden kann. Diese Kunststoff- bzw. Leichtmetallprofile oder -rohre werden bevorzugt mit einer Scheibenkonstruktion miteinander verbunden. Am Ende eines jeden Pflückarmes ist eine Greifvorrichtung ausgebildet. Die Greifvorrichtung ist bevorzugt durch einen pneumatischen Sauggreifer ausgebildet. Die Greifvorrichtung kann jedoch auch durch eine mechanische Greifhand mit Greiffingern, auch Greifklaue genannt, ausgebildet sein. Mit Hilfe der Greifvorrichtung wird zunächst der Pflückarm auf den zu erntenden Apfel zubewegt, insbesondere mit einer schnellen Bewegung, dann vor Erreichen des zu pflückenden Apfels abgebremst, wobei anschließend eine relativ langsamere, schonende Greifbewegung durchgeführt wird. Im Rahmen der Erfindung ist es hier jedoch auch vorstellbar, dass eine kombinierte Greifsaugbewegung durchgeführt wird. Beispielsweise kann ein zu erntendes Obstgut, insbesondere ein Apfel, von zwei vorzugsweise sich gegenüberliegenden Seiten durch an den Enden der Greifvorrichtung angeordnete Saugköpfe, insbesondere Saugaufsätze, ergriffen werden.

Besonders bevorzugt ist vorgesehen, dass nach Ergreifen des Obstes eine Knickbewegung durchgeführt wird, insbesondere bei Ergreifen eines Apfels ist es wichtig, den Apfel an einer gewachsenen Sollbruchstelle zu ernten, um möglichst den Stiel des Apfels zu erhalten, so dass gerade keine Keime oder sonstigen Erreger in den Apfel einziehen können. Durch die Möglichkeit der Knickbewegung wird gerade diese vorteilhafte Ernte automatisch durchgeführt. Die Greifvorrichtung weist ferner einen Sensor auf, der eine Feinidentifizierung des zu pflückenden Obstes vornimmt. Insbesondere wird das Obst klassifiziert in erntebares Obst oder in Saftobst. Ferner kann der Sensor auch eine Bremsfunktion aufweisen, so dass kurz vor Erreichen der zu erntenden Frucht, insbesondere 10 cm vor Erreichen der zu erntenden Frucht, ein Bremssignal an die Steuerung des Pflückarmes abgegeben wird.

Damit nunmehr die Armteile untereinander aber auch die Greifvorrichtung entsprechende Bewegungen relativ zueinander durchführen können, ist eine diese koppelnde Aktuatorik vorgesehen. Beispielsweise können hierzu pneumatische oder elektrische oder elektromechanische Aktuatoren eingesetzt werden. Damit die Drehbewegung durchgeführt werden kann, ist wiederum vorgesehen, dass entsprechende Drehmotoren an dem Pflückwagen vorhanden sind, über welche die Pflückarme mit dem Pflückwagen gekoppelt sind. Beispielsweise können hier elektromechanische Servomotoren eingesetzt werden. Alternativ ist es auch vorstellbar, bei einem ausschließlich pneumatisch betriebenen Pflückwagen einen Zylinder mit Zahnstange einzusetzen, dieser kann dann wiederum eine Drehscheibe ansteuern. Auf der Drehscheibe ist dann der Pflückarm angeordnet.

Nach Ausführen des Pflückvorganges wird der Pflückarm zurück in Richtung Pflückwagen bewegt und legt den geernteten Apfel auf dem Förderband ab.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: ein Pflückwagen in einer Seitenansicht,
- Figur 2: eine Frontansicht mit Zugwagen,
- Figur 3a und b: die Seitenansichten einer anderen Ausführungsvariante in zusammengeschobenen und ausgefahrenen Zustand,
- Figur 4: einen Querschnitt durch den Pflückwagen mit Förderband,
- Figur 5: die Seitenansicht einer Ausführungsvariante für das gleichzeitige Pflücken im oberen und im unteren Bereich,
- Figur 6: die Seitenansicht und Querschnitt eines erfindungsgemäßen Pflückwagensystems, bei welcher die Transportkisten auf dem Straßentransportzug befüllt werden können,
- Figur 7a und b: zwei Ausführungsbeispiele für das Verschließen des Förderbandes im senkrechten Bereich durch ein Deckelband oder durch Leitbleche,
- Figur 8a bis c: ein Ausführungsbeispiel für das Deckelband und zwei verschiedene Konfigurationen für das Förderband,
- Figur 9a und b: das Förderband mit seitlichen Sammelplatten,
- Figur 10 a und b: zwei Querschnittsansichten durch ein Förderband mit seitlichen Sammelplatten
- Figur 11a bis d: voneinander verschiedene Ansichten des Sammel- und Förderbandes mit aufgesetzten Bürstenleisten,
- Figur 12: den oberen Teils des Gestells ausgebildet durch Profile in einer perspektivischen Ansicht ohne Förderband und
- Figur 13 und 14: einen jeweiligen Pflückarm in verschiedenen Ansichten.

In den Figuren werden für gleiche oder ähnliche Bauteile dieselben Bezugszeichen verwendet, auch wenn eine wiederholte Beschreibung aus Vereinfachungsgründen entfällt.

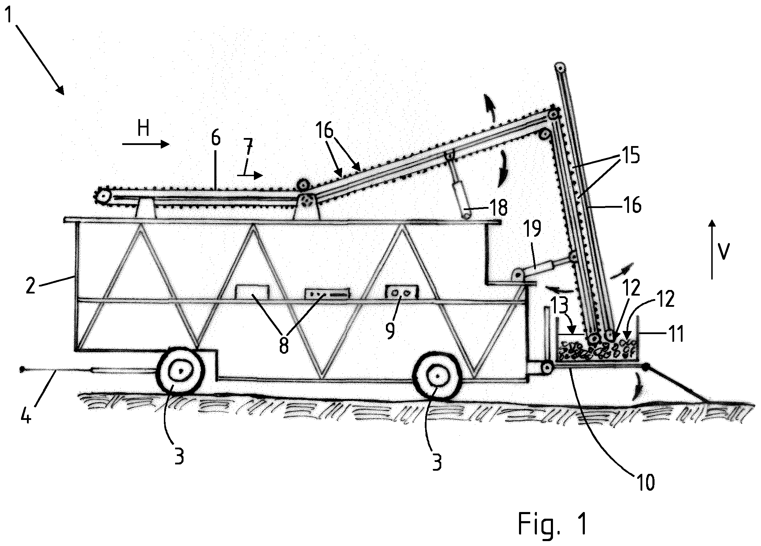

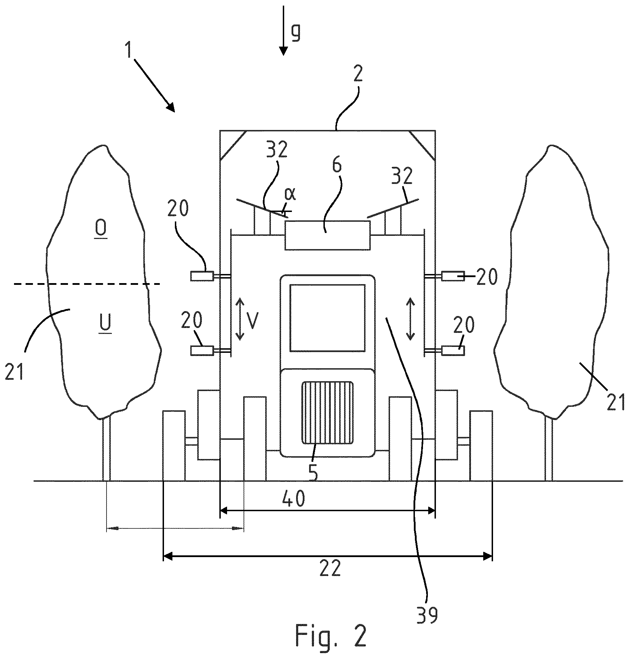

Figur 1 zeigt einen erfindungsgemäßen Pflückwagen 1, aufweisend ein Gestell 2, welches hier als Stabgitterkonstruktion ausgebildet ist. Der Pflückwagen 1 weist selbst vier Räder 3 auf, wobei zwei sichtbar sind und vordere Räder 3 über eine Deichsel 4 schwenkbar sind. Hier kann eine Koppelung mit einem in Figur 2 dargestellten Zugfahrzeug in Form einer Traktors 5 erfolgen. Gleichzeitig ist es vorstellbar, dass der Pflückwagen 1 dann von dem Zugfahrzeug mit Strom und/oder mechanischer bzw. hydraulischer Energie versorgt wird, so dass das auf dem Pflückwagen 1 angeordnete Förderband 6 in Förderrichtung 7 bewegt werden kann. Alternativ ist es vorstellbar, dass eigene Sensoren 8 oder aber auch Computersteuerungen 9 auf den Pflückwagen 1 angeordnet sind, die Energie erzeugen können oder aber die einzelnen Eigenschaften bezüglich eines nachfolgend beschriebenen Heb- oder Senkvorganges bzw. der Vorgabe der Geschwindigkeit des Förderbandes 6 eingreifen können.

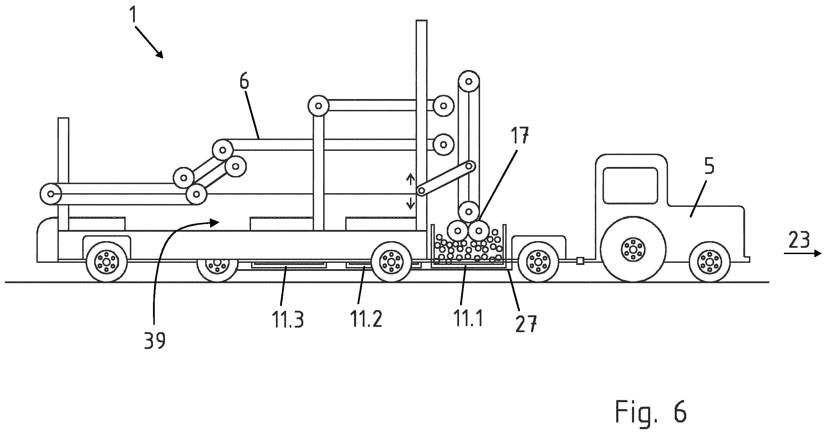

Insbesondere ist das Förderband 6 in Horizontalrichtung H ausgeführt. Am Ende des Pflückwagens 1 ist ein Kistenhalter 10 angeordnet, auf dem eine Sammelkiste 11 angeordnet ist. In der Sammelkiste 11 werden in diesem Fall Äpfel 12, die zuvor geerntet und über das Förderband 6 gefördert wurden, gesammelt. Erfindungsgemäß ist hier jedoch vorgesehen, direkt in eine auf einen Straßentransportwagen 27 angeordnete Sammelkiste 11 zu fördern, so wie in Figur 6 dargestellt.

Damit die Äpfel 12 möglichst schonend auf die in Vertikalrichtung V bezogene Höhe des Förderbandes 6 bis zu einer Füllstandshöhe 13 schonend abgesenkt werden können, ist ein hinterer Teil des Förderbandes 6 auf die Vertikalrichtung V bezogen umgelenkt. In diesem Teil ist eine Abdeckung 14, beispielsweise in Form eines gegenlaufenden Bandes ausgebildet, so dass zwischen Abdeckung 14, Förderband 6 und auf dem Förderband 6 angeordneten Mitnehmern in Form von Bürstenleisten 16 nach einem Fahrstuhlprinzip abgesenkt werden können. Am Austritt des vertikalen Abschnittes des Förderbandes 6 kann ein nicht näher dargestellter Bürstenhalter angeordnet sein. Um verschiedene Pflückhöhen und/oder Füllstandshöhen 13 zu realisieren, ist ein hinterer Teil des Förderbandes 6 auf die Vertikalrichtung V bezogen über einen Aktor 18, 19 auf- bzw. absenkbar, wo wiederum ein Teil des vertikal orientierten Teils des Förderbandes 6 über einen weiteren Aktor 18, 19 horizontal bewegbar ist. Hierdurch wird eine gute Verteilung in der Sammelkiste 11 erreicht. Ist die Sammelkiste 11 gefüllt wird der Straßentransportzug gemäß Figur 6 in die Lage einer Sammelkiste 11 relativ zu dem Pflückwagen bewegt.

Die nachfolgende Beschreibung bezieht sich ebenfalls auf eine bevorzugte Ausgestaltungsvariante des Pflückwagens, auch teilautomatische Pflückhilfe genannt.

Alle vier Räder sind ausschwenkbar und - wegen des unebenen Bodens in den Gassen zwischen den Baumreihen - mit einer ebenfalls vorzugsweise hydraulisch aktivierten nicht dargestellten Vertikalschwenkeinrichtung ausgestattet.

Während des Pflückvorganges zwischen den Baumreihen fährt die Pflückhilfe in Schleichgeschwindigkeit deutlich unter 10 km/h. Nicht dargestellte Lenk- und Regeleinrichtungen sorgen dafür, dass sich das Fahrzeug stets mit der gleichen Geschwindigkeit bewegt wie der Fortschritt der Pflücker. Die Einhaltung der Spur, d. h. die Steuerimpulse für das Ausschwenken der Räder, werden durch Laserstrahlen, durch Abstandshalter zu den Bäumen oder durch herkömmliche GPS-Signale vorgegeben.

Auf dem vorderen Teil des Sammelbandes legen die Pflücker, welche das Obst im unteren Teil der Bäume ernten, ihre Früchte ab. Pflücker, die das Obst im oberen Teil der Bäume ernten, stehen auf seitlich am Wagen angebrachten, nicht dargestellten Plattformen und legen die geernteten Früchte im ansteigenden Teil 3a ab.

Figur 2 zeigt eine Frontansicht des erfindungsgemäßen Pflückwagens 1, wobei auch hier das Gestell 2 sowie schematisch dargestellt das Förderband 6 angeordnet sind. Seitlich sind an dem Gestell 2 Pflückplattformen 20 angeordnet. Auf diesen Pflückplattformen 20 können menschliche Pflücker stehen und dann von den Pflanzen, insbesondere Obstbäumen 21, nicht näher dargestelltes zu erntendes Obst ernten. Der Pflückwagen 1 hat dabei eine bevorzugte Breite 22, die kleiner ist als 2 m, insbesondere kleiner als 1,70 m bevorzugt 1,50 m, so dass er durch den Abstand zwischen den Obstbaumreihen verschiedener Obstanbaugebiete hindurchfahren kann.

Der Pflückwagen 1 selbst wird von dem Traktor 5 auf die Bildebene bezogen in Richtung zum Betrachter hin gefahren. Ein großer Teil des Pflückwagens 1, insbesondere die Pflückplattformen 20 und das Förderband 6 können auf die Vertikalrichtung V in der Höhe verstellbar sein, so dass sowohl Obst in einem oberen Bereich als auch Obst in einem unteren Bereich an dem Obstbaum 21 geerntet werden kann. Ferner dargestellt sind erfindungsgemäß jeweils seitlich angeordnete Sammelplatten 32, welche in Querschnittsansicht bezogen auf das Förderband 6 in einem Winkel α zu diesem angeordnet sind. Auf der Sammelplatte 32 durch einen Pflücker abgelegtes Obst rollt somit auf das Förderband 6. Ferner ist eine Durchfahrgasse 39 unterhalb des Förderbandes 6 ausgebildet, so dass ein dargestellter Traktor 5 mit dem optional nicht näher dargestellten Straßentransportwagen unterhalb des Pflückwagens 1 herfahren kann. Bevorzugt ist das Gestell 2 des Pflückwagens 1, insbesondere das Förderband 6, auf die Vertikalrichtung V bezogen anhebbar oder absenkbar. Insbesondere weist weiterhin der Pflückwagen 1, insbesondere das Gestell 2 des Pflückwagens 1, eine derartige Innenbreite 40 auf, dass ebenfalls der vorhandene Traktor eines Obstbaubetriebes durch diesen hindurchfahren kann.

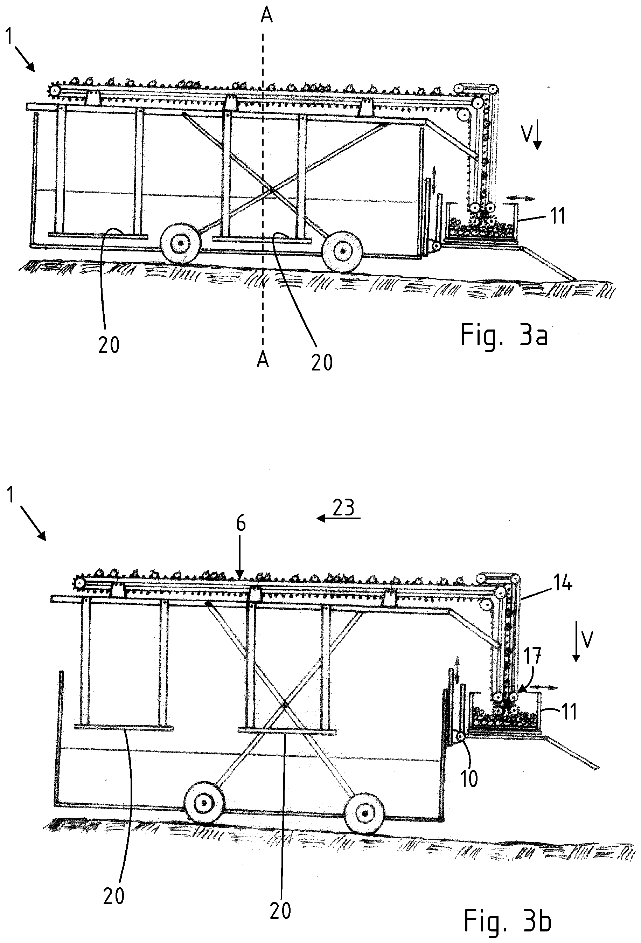

Figur 3a und 3b zeigen hier nochmals die Höhenverstellung auf die Vertikalrichtung V bezogen in Relation zu den auf dem Pflückwagen 1 angeordneten Pflückplattformen 20. Die Pflückplattformen 20 sind bezogen auf die Vertikalrichtung V auf gleicher Höhe in Fahrtrichtung hintereinander angeordnet. Somit kann durch einen ersten und einen zweiten Pflücker 24 bei einer Pflückhöhe ein Maximum an erntereifem bzw. pflückreifem Obst geerntet werden. Dies ist dargestellt in Figur 3a, bei geringerer Pflückhöhe. Im Anschluss daran kann dann gemäß Figur 3b ein zweiter Pflückdurchgang durch die gleiche Pflückgasse gefahren werden, auf einer davon verschiedenen, insbesondere höheren Höhe. Dabei ist es wiederum vorstellbar, dass sowohl der Kistenhalter 10 in der Höhe mit verstellt wird, jedoch auch nochmals relativ in seiner Höhe gegenüber dem Austritt 17 des Förderbandes 6 verstellt wird. Als Abdeckung 14 ist hier für den auf die Vertikalrichtung V bezogenen Abschnitt des Förderbandes 6 wiederum ein mitlaufendes Gegenband ausgebildet und in einem Austritt 17 schematisch dargestellt ein entsprechender Rollenbürstenaustritt gestaltet.

Nachfolgend ist der Pflückwagen 1 auch teilautomatische Pflückhilfe genannt in einer weiteren Ausführung beschrieben.

Auf Figur 3 ist die Seitenansicht einer anderen Ausführungsform der erfindungsgemäßen fahrbaren, teilautomatischen Pflückhilfe dargestellt und zwar im unteren Bild, im eingeschobenen und im oberen Bild im ausgefahrenen Zustand. In dieser Form erfüllt die Pflückhilfe einen ganz wesentlichen Teil der Aufgabenstellung, der mit dem bisherigen Stand der Technik und den auf dem Markt befindlichen Pflückhilfen nicht erreicht wird, nämlich, dass mit ein und derselben Maschine das Pflücken sowohl im unteren Bereich der Bäume, als auch - in einem zweiten Arbeitsgang - im oberen Bereich erfolgen kann. Das auf seiner gesamten Länge horizontal angeordnete Sammelband ist - im Gegensatz zu der Ausführungsform von Figur 1 - über die Stützen fest mit der oberen Plattform der fahrbaren Pflückeinrichtung verbunden. Die Befestigung zwischen den Stützen und der oberen Plattform erfolgt durch im Einzelnen nicht dargestellte, selbsthemmende, mit Sicherungsstiften versehende Keilverbindungen, so dass das Sammelband nach der Ernte in einfacher Weise vom Fahrzeug gelöst werden kann. Dadurch wird es möglich, das Fahrzeug sowohl im eingefahrenen, als auch im ausgefahrenen Zustand auch für andere Arbeiten als Bühne zu nutzen, z. B. für das Beschneiden der Bäume im Winter und das Spritzen im Frühjahr und frühen Sommer.

Die Veränderung der Arbeitshöhe erfolgt durch die Schere, deren Bewegung durch einen nicht dargestellten Hydraulikzylinder oder einen Kettenzug erfolgen kann. Die Veränderung der Hubhöhe beträgt vorzugsweise 1,2 bis 2 m.

An beiden Seiten der Pflückeinrichtung befinden sich jeweils zwei oder drei Arbeitsbühnen, die vorzugsweise aus Gitterrosten bestehen und über Halteelemente mit der oberen Plattform verbunden sind. Beim Ernten der Früchte im unteren Bereich befinden sich die Plattformen in Bodennähe, beim Ernten im oberen Bereich werden sie über den vollen Hub angehoben. Die Auslegung ist vorzugsweise so, dass auf jeder Plattform zwei Pflücker arbeiten können, so dass das Sammelband von bis zu acht Pflückern befüllt wird.

Im hinteren vertikalen Teil des Sammelbandes läuft synchron und mit gleicher Geschwindigkeit das Deckelband mit, so dass die Früchte nicht herausfallen können. Wie in Figur 2 dargestellt wird das Deckelband leicht und federnd auf das Sammelband gedrückt.

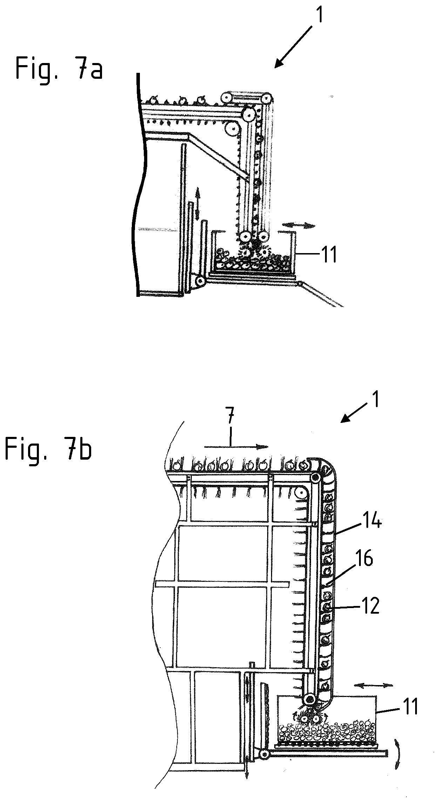

In dieser erfindungsgemäßen Variante legt sich das Deckelband bereits an der Stelle auf das Sammelband auf, um absolut auszuschließen, dass geerntete Früchte beim Abknicken im Bereich aus dem Sammelband herausfallen können. Anstelle des Sammelbandes können bei Verwendung von Borstenreihen auch einfache Leitbleche gemäß Figur 7 Verwendung finden.

Um einen besonders schonenden Austrag an der Stelle zu erreichen, sind bei dieser Variante - abweichend von Figur 1 - zwei gegensinnig rotierende, mit Borsten besetzte Walzen unterhalb des Austrags angeordnet. Dadurch können die Äpfel nicht in die Transportkiste fallen, sondern sie werden langsam - entsprechend der Rotationsgeschwindigkeit der Borstenzylinder - ausgetragen. Die Borsten sind wendelförmig wie bei einer Schnecke auf den Oberflächen der Zylinder in einer solchen Weise angeordnet, dass das Obst durch die Drehbewegung auch nach außen geleitet und die Transportkiste dadurch gleichmäßig befüllt wird.

Die abklappbare Basis für die Transportkiste lässt sich mit der Führungseinrichtung an der Rückseite des Pflückwagens durch einen nicht dargestellten Zylinder oder durch einen ebenfalls nicht dargestellten Kettenzug - wie bei Gabelstaplern - entsprechend den Pfeilen auf- und abbewegen. Dieses Auf- und Abwegen, das automatisch durch nicht dargestellte Sensoren und ein Rechnerprogramm gesteuert wird, hat zwei Aufgaben: einmal erfolgt die Auf- und Abwärtsbewegung synchron mit der Verstellung der Arbeitshöhe durch die Schere, zum anderen wird die Basislatte bei jeder Hubhöhe und feststehender Schere mit zunehmenden Füllungsgrad langsam nach unten bewegt.

Um eine gleichmäßige Befüllung zu erreichen, wird bei dieser Ausführungsform - im Gegensatz zu Figur 1 - nicht das Sammelband mit dem Deckelband hin- und herbewegt, sondern die Transportkiste. Zu diesem Zweck befindet sich zwischen der Basis und der Transportkiste eine verschiebbare Zwischenplatte, die sich gleichmäßig in einer solchen Weise hin- und herbewegt, dass der Austrag die gesamte Transportkiste bestreicht.

Zum Wechseln der Transportkisten wird die Basis über die Führungen und in die Nähe des Erdbodens abgesenkt, wobei das Abklappen in der in Figur 1 beschriebenen Art und Weise erfolgt.

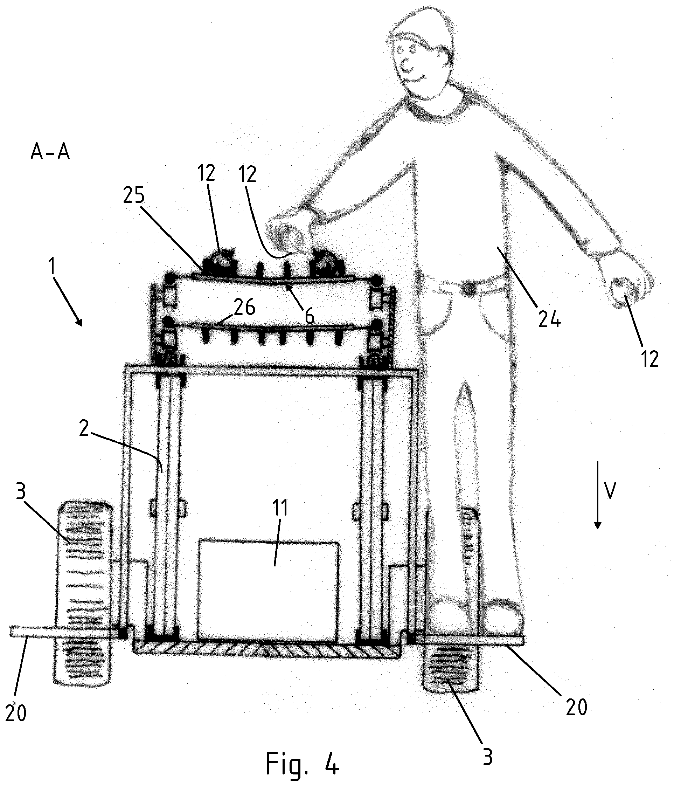

Figur 4 zeigt eine Querschnittansicht gemäß der Schnittlinie A-A aus Figur 3a. Hier ist ein menschlicher Pflücker 24 dargestellt, der gepflückte Äpfel 12 auf das Förderband 6 legt. Auf die Vertikalrichtung V bezogen befindet sich der Pflückwagen 1 und die fest mit diesem verbundenen Pflückplattformen 20 in abgesenkter Position. Nicht näher dargestellt ist das hinten am Pflückwagen 1 angeordnete vertikale Stück des Förderbandes 6 zum Abfördern der über das Förderband 6 geführten Äpfel 12 in die Sammelkiste 11. Gut ersichtlich ist hier, dass das Förderband 6 einen Obertrum 25 und einen Untertrum 26 aufweist. Der Obertrum 25 transportiert das darauf abgelegte Obst, insbesondere die Äpfel 12 in Förderrichtung 7 ab und der Untertrum 26 stellt die Rückführung des Förderbandes 6 dar.

Nachfolgend ist wiederum eine weitere Ausgestaltungsvariante beschrieben.

Figur 4 ist die schematische Darstellung eines Schnittes durch die fahrbare Pflückhilfe an der Stelle A-A in Figur 3. Die Arbeitsbühnen sind abgesenkt, um das Obst im unteren Teil der Bäume zu pflücken. Die Stützen des Sammelbandes sind an ihren unteren Enden auf U-förmigen Trägern befestigt, welche über die in der Beschreibung zu Figur 3 erwähnten leicht lösbaren Keilverbindungen mit der oberen Platte verbunden sind.

Der Gurt des Sammelbandes ist in dieser besonders vorteilhaften Variante an beiden Seiten über Klemmen oder Verbindungslaschen mit den vorzugsweise elastischen Zugmitteln verbunden, die über die Tragrollen und die Antriebsrolle in Figur 1 laufen. Das hat den bedeutenden Vorteil, dass das Sammel- und Transportband im befüllten Zustand nach oben und unten abgewinkelt werden kann. Darüber hinaus ist eine einfache Austauschbarkeit gegeben. Zum Positionieren der Früchte ist der Gurt des Sammelbandes mit zylinderförmigen Nippeln versehen.

Das Pflücken und die dazugehörige Verfahrenstechnik in den Gassen zwischen den Obstbaumreihen ist sowohl in den verschiedenen Anbaugebieten als auch bei verschiedenen Obstbauern zum Teil sehr unterschiedlich. So entspricht die Ausführungsform, die in Figur 3 und Figur 4 beschrieben ist, dem Wunsch und den Anforderungen, das Pflücken im oberen und im unteren Bereich in getrennten Durchgängen durchzuführen.

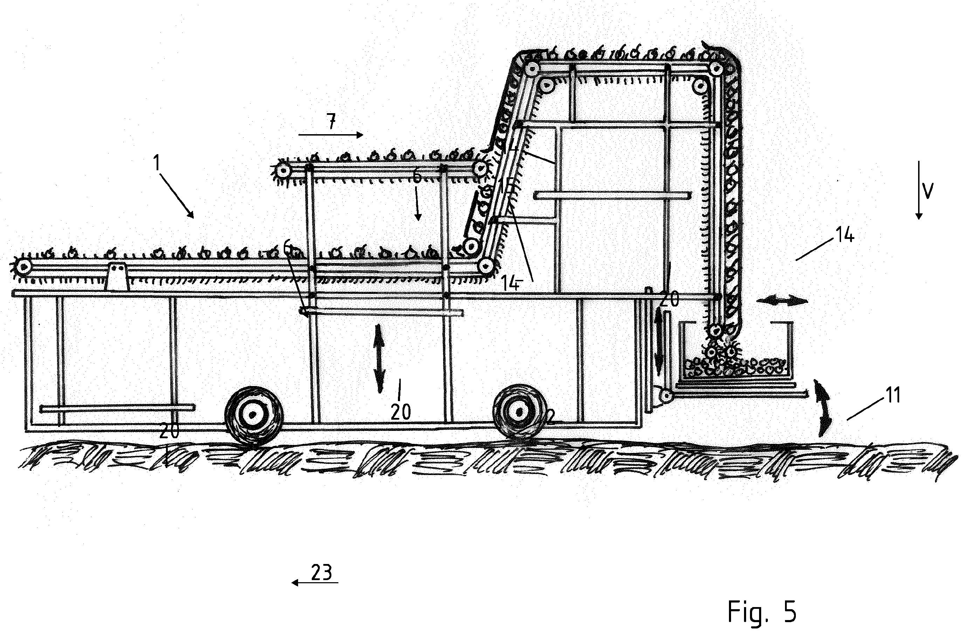

Figur 5 zeigt eine weitere Ausgestaltungsvariante des Pflückwagens 1, bei dem in Förderrichtung 7 drei auf die Vertikalrichtung V bezogen in verschiedenen Höhen positionierte Pflückplattformen 20 angeordnet sind. Die in Fahrtrichtung bezogenen hinteren Pflückplattformen 20 sind in ihrer Höhe nochmals relativ zu dem Pflückwagen 1 verstellbar. Es ist somit möglich, bei einer Durchfahrt der Gasse zum Ernten, in drei verschiedenen Höhen gleichzeitig Obst zu pflücken. Der konstruktive Aufbau mittels des Gestells 2 sowie die Verwendung des Förderbandes 6 erlaubt es einen Pflückwagen 1 individuell an die Bedürfnisse des Pflückgebietes, der Pflückgröße und/oder auch der Ernte anzupassen. Insbesondere ist die auf der Bildebene mittlere Pflückplattform 20 mit einem gesonderten Förderband 6 ausgestattet, welches einen ersten vertikalen Abschnitt des eigentlichen Förderbandes 6 beliefert. Hier ist eine Abdeckung 14 vorgesehen, welche nach Art einer Jalousie oder Rolladenpanzers funktioniert und somit in der Höhe verstellbar ist. Auch hier werden dann Räume 15 geschaffen, in denen die Äpfel 12 eingeführt werden können und auf die Vertikalrichtung V bezogen nach oben befördern, wobei im hinteren Bereich dann wiederum ein vertikal abfördernder Bereich ausgebildet ist, mit einer Abdeckung 14 um die geernteten Äpfel 12 in die Sammelkiste 11 zu bewegen, die auf einem nicht näher dargestellten Straßentransportwagen angeordnet ist.

Nachfolgend ist wiederum die Ausgestaltungsvariante weitergehend beschrieben.

Die Ausführungsform gemäß Figur 5 ist im Gegensatz dazu darauf ausgelegt, das Pflücken in drei verschiedenen Höhen gleichzeitig vorzunehmen. Der Pflückwagen kann dabei entweder an einen Traktor angehängt oder gemäß Figur 1 selbstfahrend sein. Die Transportkiste wird - entsprechend der Ausführungsform gemäß Figur 3 - am hinteren Ende des Pflückwagens aufwärts und abwärts bewegt. Auf jeder Seite gibt es in unterschiedlichen Höhen drei Plattformen, auf denen die Pflücker stehen können. Die beiden äußeren Plattformen sind fest, die mittlere ist höhenverschiebbar.

Das Sammel- und Förderband ist im vorderen Bereich des Pflückwagens auf das Pflücken "unten" und im hinteren Bereich auf das Pflücken "oben" ausgelegt. Dazu gibt es dann für das Pflücken im verstellbaren mittleren Bereich ein zusätzliches Sammelband, welches auf den steilen Teil des Basissammelbandes übergibt. Verschiebbare, gliederförmige Abdeckbleche, die nach dem Prinzip der Rollladen gestaltet sind, sorgen dafür, dass die Äpfel in den steilen Bereichen nicht herausfallen können.

In Figur 6 ist die Erfindungsgemäße Ausgestaltung gezeigt. Der Traktor 5 zieht dabei einen Straßentransportwagen 27, auf welchem die Sammelkisten 11 in Fahrtrichtung 23 hintereinander angeordnet sind. Ist die erste Sammelkiste 11.1 gefüllt, so kann der Traktor 5 relativ gegenüber dem Pflückwagen 1 in Fahrtrichtung 23 nach vorne verfahren werden, und der Austritt 17 der geförderten Äpfel 12 in die auf die Fahrtrichtung 23 bezogene zweite Sammelkiste 11.2 eingeführt werden. Ist die auf die Fahrtrichtung 23 letzte Sammelkiste 11.3 gefüllt, so kann der Straßentransportwagen 27 mit dem Traktor 5 vollständig herausfahren und die Äpfel 12 zu einem Lagerort verbringen. Ein neuer Straßentransportwagen 27 mit Traktor 5 kann wiederum in den Pflückwagen 1 einfahren und unter dem Pflückwagen 1 hindurchfahren, wobei dann der Befüllungsvorgang erneut beginnt. Unterhalb des Pflückwagens 1 ist dann wiederum die Durchfahrgasse 39 zum Ein- bzw. Durchfahren des Straßentransportwagens 27 ausgebildet. Auch kann, wie hier dargestellt, der Pflückwagen 1 an den Straßentransportwagen 27 angeklemmt werden. Es ist somit möglich, durch Fahrt des Traktors 5 in Fahrtrichtung 23 den Straßentransportwagen 27 zu ziehen und gleichzeitig den Pflückwagen 1 mitzuziehen, so dass auf dem Förderband 6 abgelegtes Obst direkt von dem Pflückwagen 1 in Sammelkisten 11 gefüllt wird, welche auf dem Straßentransportwagen 27 angeordnet sind. Ist die auf die Fahrtrichtung 23 bezogene erste Sammelkiste 11.1 vollständig gefüllt, kann die Vorwärtsfahrt des Traktors 5 kurzzeitig unterbrochen werden und die Klemm- bzw. Bremsvorrichtung gelöst werden, so dass der Straßentransportwagen 27 eine Relativbewegung in Fahrtrichtung 23 zu dem Pflückwagen 1 vornimmt und dann wiederum der Vertikalförderer, insbesondere der Austritt 17 des Vertikalförderers, in die auf die Fahrtrichtung 23 folgende zweite Sammelkiste 11.2 das geerntete Obst fördert. Sodann kann die Vorwärtsfahrt des Traktors 5 und damit der Erntevorgang fortgesetzt werden. Bei vollständig gefüllten Sammelkisten 11 des Straßentransportwagens 27 kann dieser aus dem Pflückwagen 1 herausfahren und ein leerer Straßentransportwagen 27 bzw. ein Straßentransportwagen 27 mit leeren Sammelkisten 11 kann in die Durchfahrgasse 39 des Pflückwagens 1 einfahren. Auch diese Ausgestaltung ist auf alle anderen Varianten übertragbar.

Eine weitere Beschreibung der in Figur 6 ist nachfolgend ausgeführt.

Auf Figur 6 ist die erfindungsgemäße Ausführungsform in einer Seitenansicht dargestellt, die alle bisher vorgeschlagene Lösungen in verfahrenstechnischer Hinsicht bei weitem übertrifft, weil das gepflückte Obst direkt in die auf den Straßentransportzügen stehenden Transportkisten eingefüllt werden kann. Figur 2 zeigt den dazugehörigen Querschnitt.

Alle Pflückbühnen und auf dem Markt befindlichen Pflückhilfen füllen die engen Gassen zwischen den Obstbaumreihen voll aus. Die Straßentransportzüge mit den leeren Transportkisten können leider nicht rückwärts in die Pflückgassen hineingezogen und hinter den Pflückhilfen bzw. Pflückbühnen so positioniert werden, dass sie nach dem befüllen wieder herausgezogen werden können.

Die auf Figur 6 und Figur 2 dargestellte Ausführungsform der Erfindung ermöglicht es nun, durch eine besonders schmale Konstruktion der seitlichen Gitterträger des Pflückwagens das Sammelband anzuheben, so dass der Traktor mit dem Straßentransportzug darunter hindurch fahren kann.

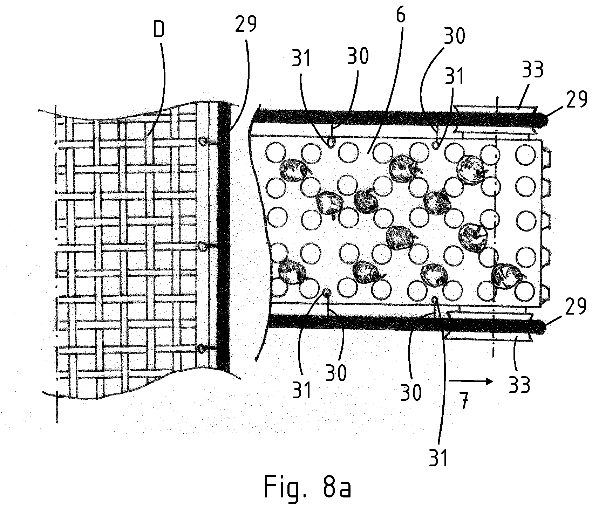

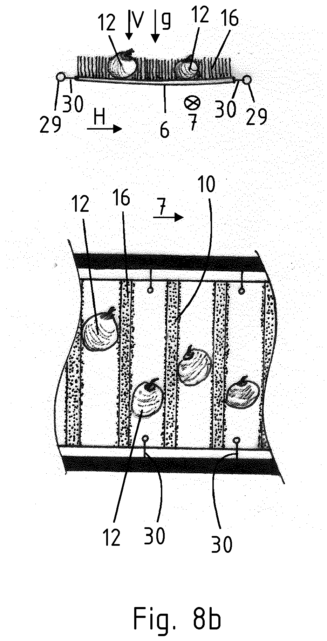

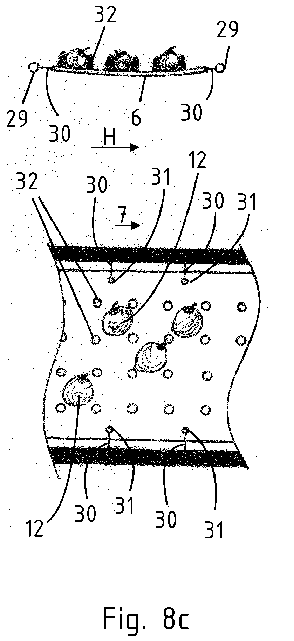

Figur 8a bis c zeigen verschiedene Ausgestaltungsvarianten des erfindungsgemäßen Förderbandes 6. Gut zu erkennen ist, dass ein jeweils außen umlaufendes Zugband 29 dargestellt ist, wobei sich von dem Zugband 29 in Horizontalrichtung H bzw. quer zur Förderrichtung 7 Koppelglieder 30 erstrecken, an denen das Förderband 6 oder das Deckelband D aufgehangen sind. Hierzu sind jeweils an den Seiten des Förderbandes 6 bzw. des Deckelbandes D Ösen 31 angeordnet, wobei die Koppelglieder 30 in die Ösen 31 eingehängt bzw. eingehakt sind. Somit kann unter Einfluss der Erdanziehungskraft g, beispielsweise in Figur 8b dargestellt, ein unterer Bereich U bei aufgelegten Äpfeln 12 leicht bauchig nach unten durchhängen. Auch ist es vorstellbar, dass ein unterer Steg, an dem die Borsten der Bürstenleiste 16 befestigt sind, eine Krümmung aufweist, so dass das Förderband 6 bauchig bezogen auf die Vertikalrichtung V nach unten durchgebogen ist. Die auf dem Förderband 6 abgelegten Äpfel 12 rollen somit alle von den Seiten kommend zu einer Mitte und können dann in Förderrichtung 7 abgeführt werden. Quer zur Förderrichtung 7 sind dann die einzelnen Bürstenleisten 16 angeordnet, so dass eine Mitnahme aufgrund formschlüssigen Anlagenkontakts eines jeden Apfels 12 durch eine Bürstenleiste 16 gegeben ist. Alternativ dazu sind beispielsweise in Figur 8c dargestellt einzelne Stege oder Pinne angeordnet, welche entsprechend formschlüssig die Äpfel 12 umschließen und in Förderrichtung 7 mitnehmen.

Nachfolgend ist Figur 8 weitergehend beschrieben.

Figur 8 zeigt die Draufsicht eines besonders vorteilhaften Deckelbandes und die Draufsicht sowie die Querschnitte von drei Ausführungsvarianten für das Sammelband.

Das Deckelband besteht aus einem netzförmigen Geflecht von Bändern, dessen Öffnungen so bemessen sind, dass auch kleinere Früchte nicht herausfallen können.

Beim Sammelband zeigt die obere Draufsicht die Ausführungsvariante mit kegelstumpfförmigen Erhebungen. Die Querschnitte und die beiden unteren Draufsichten zeigen Nippel bzw. Bürstenreihen, die auf dem Sammelband befestigt sind. Dabei sind die Bürstenreihen eine ganz besonders günstige Lösung. Sowohl beim Sammel- als auch beim Deckelband ist die Ausführungsvariante gewählt worden, bei der seitliche Zugmittel über die Trag- und die Antriebsrollen laufen und das Sammel- bzw. Deckelband über Ösen und Verbindungslaschen an diesen Zugmitteln befestigt ist. Wie bereits erwähnt, ist das die beste Ausführungsform, wenn die Bänder sowohl nach oben als auch nach unten abgewinkelt werden müssen.

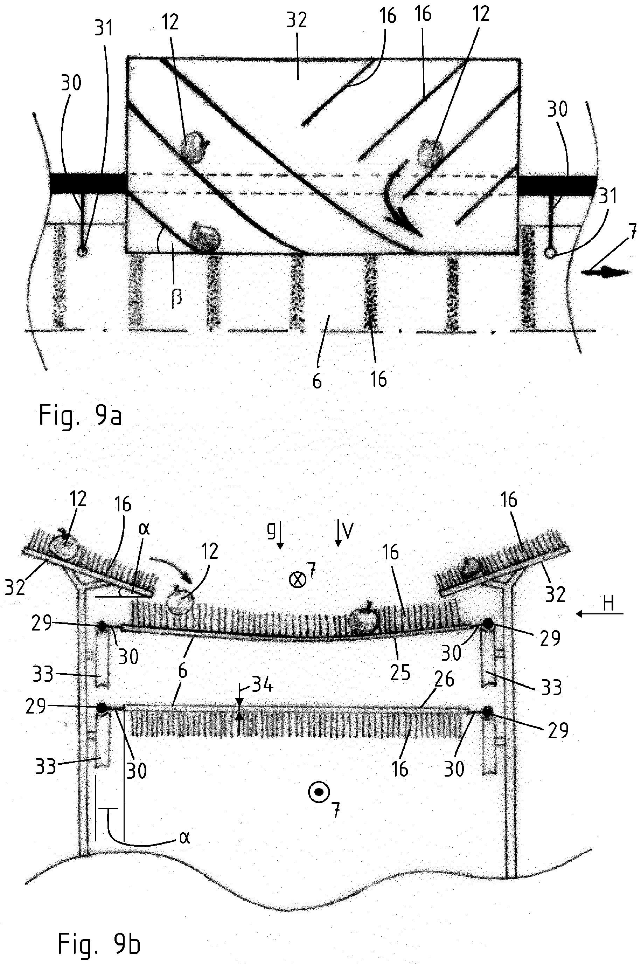

Figur 9a und b zeigen eine jeweilige Teilansicht des Förderbandes 6. In Figur 9a ist dieses in Draufsicht dargestellt. Wiederum zu erkennen sind die Bürstenleisten 16 sowie die Sammelplatte 32. Hierauf abgelegte Äpfel 12 werden von ebenfalls auf der Sammelplatte 32 angeordneten Bürstenleisten 16 verlangsamend und schonend derart gelenkt, dass sie sanft auf das Sammelband abrollen. Die Äpfel können somit an mehreren Stellen auf die Sammelplatte 32 aufgelegt werden, wobei dann bezogen auf die Förderrichtung 7, die Bürstenleisten 16, welche der abgelegte Apfel 12 abschließend passiert um auf das Förderband 6 zu gelangen, grundsätzlich in einem Winkel β kleiner 45° zur Förderrichtung 7 orientiert sind. Bevorzugt ist der Winkel β kleiner 45°, insbesondere kleiner 40°, und größer 5°.

Figur 9b zeigt weiterhin eine Querschnittsansicht durch das Förderband 6. Gut zu erkennen sind seitlich umlaufende Rollen 33, so dass der Obertrum 25 und der Untertrum 26 entsprechend der Förderrichtung 7 über ein seitlich umlaufendes Zugband 29 gefördert werden. Von diesem aus sind dann in Horizontalrichtung H Koppelglieder 30 angeordnet, an denen das Förderband 6 selbst aufgehangen ist.

Die auf den Sammelplatten 32 abgelegten geernteten Äpfel 12 können somit schonend und verlangsamt auf das Förderband 6 rollen und werden vom Obertrum 25 abtransportiert, der Untertrum 26 führt das Förderband 6 wiederum zurück. Die Sammelplatten 32 sind dann in einem Winkel α zur Horizontalrichtung H angeordnet, so dass wiederum die auf der Sammelplatte 32 abgelegten Äpfel 12 aufgrund der Erdanziehungskraft g und ihrem Eigengewicht auf das Förderband 6 rollen. Ferner eingezeichnet ist die Dicke 34 des Förderbandes 6 selber bzw. der Kunststoffplane, vorzugsweise Lastwagenplane, aus welcher das Förderband 6 ausgebildet ist.

Figur 9 zeigt die Draufsicht und einen Querschnitt durch ein Sammelband mit Borstenreihen für die Positionierung der zu fördernden Äpfel, bei welchem seitliche Zulaufflächen den Pflückern das "blinde" Ablegen der Äpfel erleichtern. Hierdurch wird nach Ansicht vieler Obstbauern die Pflückleistung ganz erheblich gesteigert. Auch die seitlich geneigten Zulaufflächen sind mit Borstenreihen versehen. Außerdem sind sie ausgepolstert, damit es auch bei "heftigem" Ablegen oder Fallenlassen nicht zu Beschädigungen der Äpfel kommt.

Während die bekannten sog. Halbautomaten spezielle schmale Zufuhrbänder zu dem zentralen Förderband haben, genügen bei unserer Ausführung einfache geneigte Flächen. Dadurch werden sowohl die Störanfälligkeit und die Wartung, als auch die Anschaffungskosten ganz erheblich verringert.

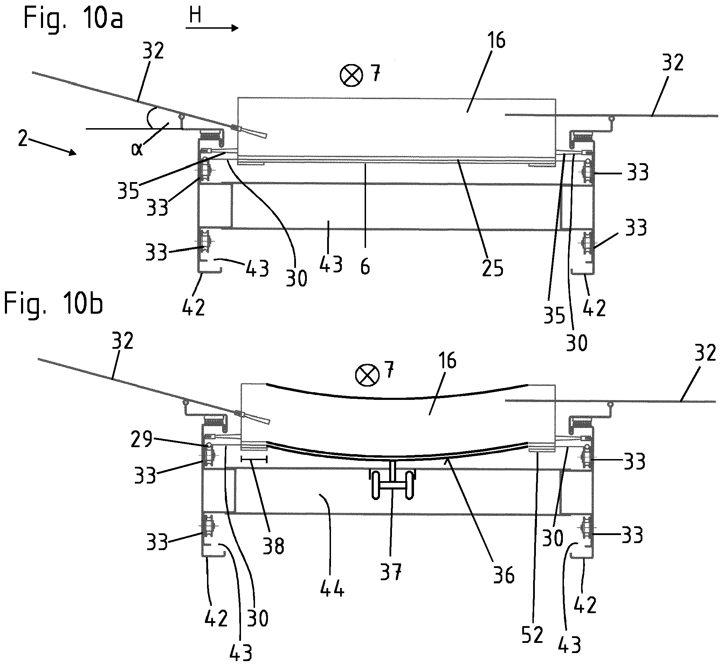

Figur 10a und b zeigen eine jeweilige Querschnittansicht durch einen oberen Teil des Gestells 2. Zu erkennen sind die Rollen 33, an denen ein außen umlaufendes Zugband 29 in Förderrichtung 7 umlaufend ist. Auf dem Obertrum 25 sind die Bürstenleisten 16 dargestellt sowie die jeweilige Sammelplatte 32. Wird nunmehr die Bürstenleiste 16 in Förderrichtung 7 bewegt, kann aufgrund der Flexibilität der Bürsten diese durch elastische Verformung der Borsten selbst, die Sammelplatte 32 passieren. Die Sammelplatten 32 können im Winkel α verstellt werden, so dass diese ein schnelleres oder sanfteres Abrollen des auf der Sammelplatte 32 abgelegten Gutes bewegen. Auch können entsprechende Bürsten, wie in Figur 9 dargestellt auf der Sammelplatte 32 selbst angeordnet sein. Ferner dargestellt sind Seitenbürsten 35, die ein seitliches Herunterfallen von auf dem Förderband 6 transportierten nicht näher dargestellten Äpfeln 12 verhindern.

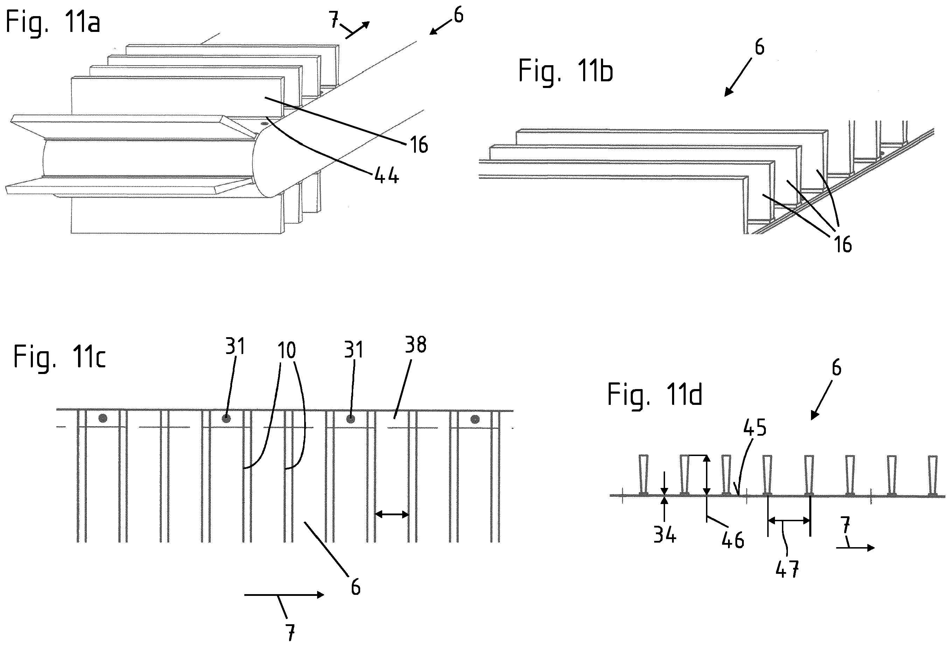

In Figur 10b ist gezeigt, dass an der Unterseite 36 des Förderbandes 6 eine mitlaufende Rollenführung 37 angeordnet ist, so dass sich das Förderband 6 dauerhaft aus einer Mitte hin absenkt bzw. bauchig ausgebildet ist, unabhängig von auf dem Förderband 6 abgelegtem Gut. Dies ermöglicht es, dass das auf das Förderband 6 aufgelegte zu fördernde Gut aufgrund der Erdanziehung g in die Mitte rollt und in Förderrichtung 7 abtransportiert wird. Ferner dargestellt ist, dass das Förderband 6 an den seitlichen Endbereichen bzw. entlang seiner Längsseiten 38 durch Umlegen doppellagig ausgebildet ist oder ein Gurtband 52 an der Unterseite 36 angeordnet ist. Ferner dargestellt sind seitlich angeordnete, im Querschnitt c-förmig ausgebildete Profile 42. Die Profile 42 sind bevorzugt aus Leichtmetall, insbesondere aus Aluminium, ausgebildet. Insbesondere handelt es sich dabei um gekantete Aluminiumprofile. Innerhalb eines Hohlraumes 43 sind dann die Rollen 33 zur Führung und Lenkung des Zugbandes 29 angeordnet. Die Profile 42 werden jeweils durch einen Quersteg 44 bzw. mehrere in Förderrichtung 7 in einem Abstand zueinander angeordnete Querstege 44 gekoppelt. Die Profile 42 und die Querstege 44 können durch Nieten miteinander gekoppelt sein. Gerade hier ist nochmals ein wesentlicher Vorteil der Erfindung gezeigt, wonach durch die Koppelglieder 30 das Förderband 6 auf die Horizontalrichtung H bezogen nach innen versetzt ausgebildet ist. Insbesondere ist das Förderband 6 somit von den Rollen 33, insbesondere Führungsrollen, beabstandet. Hierdurch kann dieses, wie in Figur 10b dargestellt, eine Krümmung nach unten aufweisen, so dass darauf abgelegtes Obst aufgrund des Eigengewichtes immer nach innen rollt. Die Krümmung kann auch durch einen in Figur 11a dargestellten Steg 44 der Bürstenleisten 16 erfolgen. Dieser ist in Figur 11a jedoch gerade, also ohne Krümmung, verlaufend. Der Steg 44 ist entweder aus Kunststoff oder Leichtmetall ausgebildet und kann dann entsprechend vorgeformt sein, so dass dieser eine Krümmung aufweist. Die mit dem Steg 44 gekoppelte Kunststoffplane ist somit bauchig nach unten gekrümmt.

Figur 11a bis d zeigen verschiedene Ansichten eines Förderbandes 6 mit den aufgesetzten Bürstenleisten 16. Die Bürstenleisten 16 erstrecken sich dabei quer zur Förderrichtung 7, die Förderrichtung 7 ist jeweils mit Pfeilen eingezeichnet, wobei ein seitliches Ende entlang der Längsseite 38 entsprechend umgeschlagen ist und seitlich die Koppelglieder 30 in Ösen 31 eingehängt sind. Ferner dargestellt ist insbesondere in Figur 11d die Dicke 34 der Kunststoffplane, welche das Förderband 6 bildet sowie die dargestellt Höhe 46, mit welcher die Bürstenleisten 16 gegenüber der Oberseite 45 des Förderbandes 6 überstehend ausgebildet sind. Die Bürstenleisten 16 sind dann jeweils mit einem Abstand 47 bezogen auf die Förderrichtung 7 zueinander angeordnet.

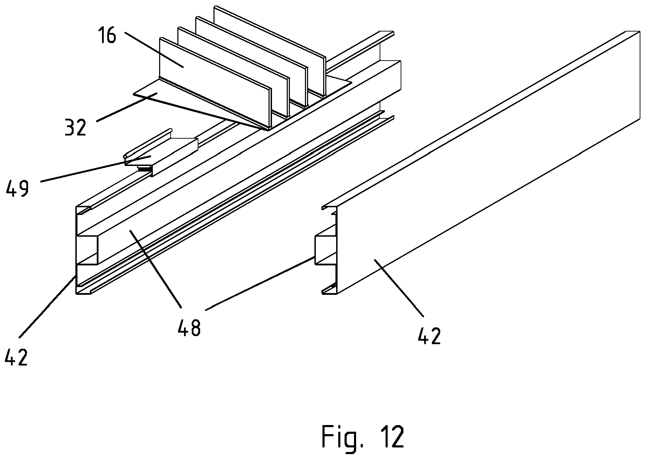

In Figur 12 ist ferner der obere Teil des Gestells 2 dargestellt, aufweisend die zwei gegenüberliegenden im Querschnitt c-förmig ausgebildeten Profile 42. Diese können ein Verstärkungsprofil 48 aufweisen, wobei die Profile 42 besonders bevorzugt aus dünnem Leichtmetallblech, insbesondere Aluminiumblech, durch Kanten hergestellt sind. Die Verstärkungsprofile 48 können dann mit den Profilen 42 gekoppelt sein, beispielsweise durch ein Nietverfahren. Ferner dargestellt ist die Sammelplatte 33 mit darauf aufgesetzten Bürstenleisten 16. Hier sind die Bürstenleisten 16 nur in eine Richtung mit einem Winkel orientiert ausgebildet, um das auf diesen abgelegte Obst dem nicht näher dargestellten Förderband zuzuführen. Weiterhin können verschiedene Sammelplattenhalter 49 angeordnet sein, so dass je nach Pflückintensität des Obstanbaugebietes optional mehrere Sammelplatten 32 angeordnet werden können und mehrere Pflücker an dem Pflückvorgang beteiligt werden können.

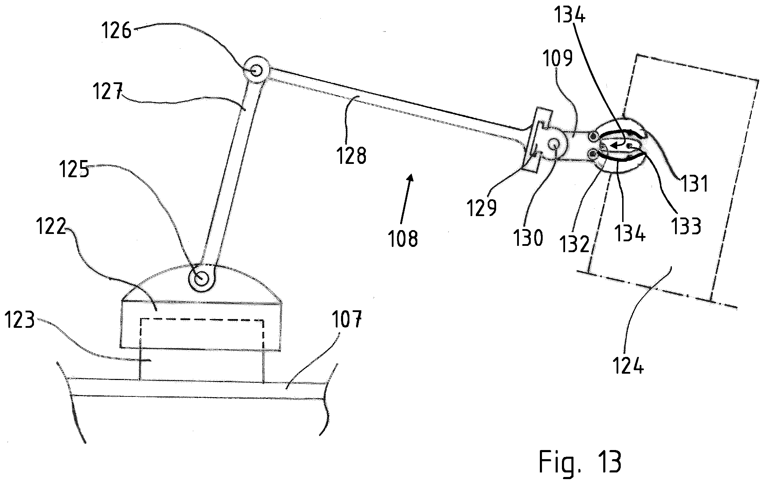

Figur 13 zeigt in Seitenansicht ein erfindungsgemäßes Ausführungsbeispiel für einen drehbar gelagerten Pflückarm 108 (Knickroboter), der mit seiner Basisplatte 122 drehbar auf der Konsole 123 gelagert ist, die ihrerseits auf der Deckplatte 107 befestigt ist. Gemeinsam mit den Gelenken 125 und 126 wird hierdurch für die Stäbe 127 und 128 die volle Raumbeweglichkeit gewährleistet, so dass sie sowohl das dem jeweiligen Pflückarm 108 von den Sensoren 132 und dem Rechner 116a zugewiesene Pflückfeld als auch den ebenfalls zugewiesenen Bereich auf dem Sammelband 6 erreichen können. Um ein schonendes Ablegen der gepflückten Frucht auf dem Sammelband 6 zu erreichen, ist der Stab 128 etwa 1 ½ mal so lang wie der Stab 127.

Am freien Ende des Stabes 128 ist die Greifeinrichtung 109 in einer solchen Weise angeordnet, dass in dem Lager 129 eine Drehbewegung und um den Bolzen 130 eine Schwenkbewegung möglich ist. Durch das Zusammenwirken des Drehlagers zwischen der Basisplatte 122 und der Konsole 123 sowie mit den Bolzengelenken 125 und 126 sowie dem Drehlager 129 und dem Bolzen 130 wird erreicht, dass die Greifeinrichtung 109 gezielt auf die über die Sensoren vom Rechner und den elektronischen Steuereinrichtungen ausgewählte, zu erntende Frucht im Bereich zu bewegt werden kann. Nach dem Umschließen der Frucht durch die Finger 131 führt die Greifeinrichtung 109 - durch den Rechner gesteuert - den für das jeweilige Obst vorgegebenen Bewegungsablauf aus, damit die "Sollbruchstelle", d. h. in den meisten Fällen die Schwachstelle am Stiel, an der gewünschten Stelle abbricht bzw. durchtrennt wird. Für die verschiedenen Obstsorten sind diese Bewegungsabläufe sehr unterschiedlich. Sie werden vor Beginn der jeweiligen Ernte als Computerprogramm in den Rechner und in die Steuereinrichtungen eingegeben. Somit können sämtliche Pflückbewegungen, welche beim Pflücken von Hand aufgrund langjähriger Erfahrungen zu optimalen Ergebnissen führen, mit der automatischen Steuerung nachgeahmt werden.

Um mit den einzelnen Pflückarmen 108 sehr große Pflückleistungen zu erreichen, müssen die Bewegungs- und Drehgeschwindigkeiten der Stäbe 127 und 128 sehr hoch sein. Daher sind die Stäbe 127, 128 und die Greifeinrichtung 109 in Leichtbauweise, vorzugsweise aus Kunststoff oder aus hochfesten Werkstoffen gestaltet, um hohe Beschleunigungen und ebenso große Verzögerungen durch die im Einzelnen nicht dargestellten Aktoren und Übertragungselemente zu erreichen. Die Bewegungsgeschwindigkeiten der Greifeinrichtung 109 betragen dabei mehr als 1 m/s.

In der Greifeinrichtung 109 befindet sich ein Abstandssensor 132, der beim Annähern an die von der Steuereinrichtung ausgewählte zu pflückende Frucht etwa 10 bis 20 cm vor der Berührung die hohe Annäherungsgeschwindigkeit abbremst und ein langsames Heranfahren über die letzte Distanz gewährleistet. An den Innenseiten der Finger 131 der Greifeinrichtung 109 können Sensoren 133, vorzugsweise kleine Kameras, angeordnet sein, die beim Umschließen der Frucht eine Zustandsmeldung an den Rechner abgeben oder ein Bild senden, welche zur Qualitätskontrolle im Rechner mit einem Sollwert oder entsprechenden Bild verglichen werden. Hierdurch kann bei Minderqualität erreicht werden, dass die gepflückte Frucht nicht dem Sammelband 6, sondern einer anderen Sammeleinrichtung, z. B. für zu versaftendes Obst, zugeführt wird.

Die bei der Annäherung an die zu pflückende Frucht aufgespreizten Finger 131 der Greifeinrichtung 109 schließen sich und legen sich schonend an die zu pflückende Frucht an, wenn der Abstandssensor 132 den Kontakt meldet. Dadurch wird gleichzeitig die Annäherungsbewegung beendet und der für den eigentlichen Pflückvorgang vorgegebene, im Rechner gespeicherte Bewegungsablauf der Greifeinrichtung 109 und der Stäbe 127 und 128 eingeleitet. Zum Zwecke einer schonenden Behandlung sind die Finger 131 auf ihrer Innenseite mit Polstern 134 überzogen.

In einer ebenfalls sehr vorteilhaften Ausführungsform können die Finger 131 auch so ausgebildet sein, dass sie sich aufgrund ihrer besonderen Konstruktion nach einer ersten Berührung am unteren Teil der Finger 131 automatisch an die zu erntende Frucht anlegen.

Im Augenblick des Abtrennens der Frucht von dem Zweig, an dem sie angewachsen war, wird durch nicht dargestellte Belastungssensoren registriert, dass die für die Pflückbewegung erforderlichen Kräfte plötzlich auf das Eigengewicht der zu pflückenden Frucht zurückgehen. Dieser Moment löst dann sofort und mit hoher Beschleunigung die Drehbewegung des Pflückarmes 108 zum Sammelband 6 aus, bei der ebenfalls Geschwindigkeiten von mehr als 1 m/s erreicht werden. Kurz bevor die Greifeinrichtung 109 mit der umschlossenen Frucht den dem jeweiligen Pflückarm 108 zugewiesenen Ablagebereich auf dem Sammelband 6 erreicht hat, wird die Bewegungsgeschwindigkeit abgebremst und die Frucht durch Öffnen der Finger 131 schonend auf dem Sammelband 6 abgelegt. Entsprechendes gilt auch beim Ansaugen an der Spitze des Greifarmes.

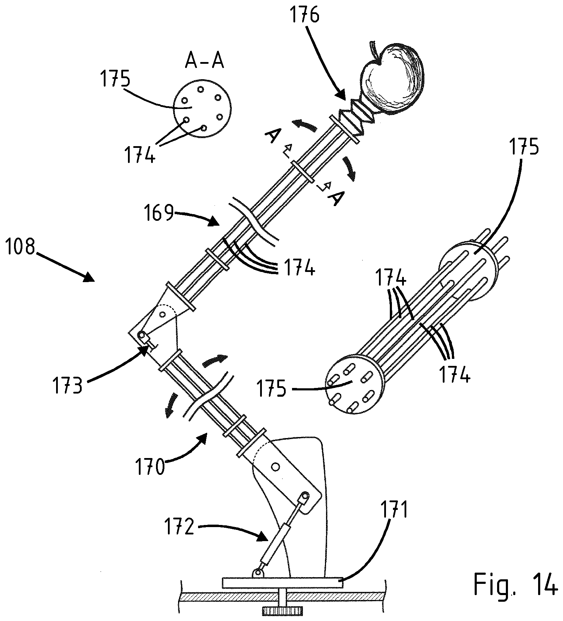

Gemäß Figur 14 weist der Pflückarm 108 zwei gelenkig miteinander verbundene Teilabschnitte 169 und 170, vorstehend auch Armteil genannt, sowie eine drehbar gelagerte Basisplatte 171 auf. Druckluftzylinder 172 und 173 sorgen für schnelle Bewegungsabläufe. Um hohe Formsteifigkeit bei geringem Gewicht zu erreichen, sind vorzugsweise 6 Kunststoffrohre 174 auf einem Kreis angeordnet. In bestimmten Abständen sorgen Stabilisierungsplatten 175 für eine hohe Formsteifigkeit. Am freien Ende des Pflückarmes befindet sich eine Saugeinrichtung 176, in welcher kurz vor Berühren der zu pflückenden Frucht durch eine nicht dargestellte Pumpe ein Unterdruck erzeugt wird, der zu einem festen Ansaugen und einer stabilen Haftung führt. Zum Ablegen der gepflückten Frucht auf dem Sammelband 6 wird der Unterdruck beendet. Weiterhin ist ein Schnitt entlang der Linie A-A gezeigt.

### Bezugszeichen:

- 1 -: Pflückwagen
- 2 -: Gestell
- 3 -: Räder
- 4 -: Deichsel
- 5 -: Traktor
- 6 -: Förderband
- 7 -: Förderrichtung
- 8 -: Sensoren
- 9 -: Computersteuerung
- 10 -: Kistenhalter
- 11 -: Sammelkiste
- 11.1 -: Sammelkiste
- 11.2 -: Sammelkiste
- 12 -: Apfel
- 13 -: Füllstandshöhe
- 14 -: Abdeckung
- 15 -: Räume
- 16 -: Bürstenleisten
- 17 -: Austritt
- 18 -: Aktor
- 19 -: Aktor
- 20 -: Pflückplattformen
- 21 -: Obstbaum
- 22 -: Breite
- 23 -: Fahrtrichtung
- 24 -: Pflücker
- 25 -: Obertrum
- 26 -: Untertrum
- 27 -: Straßentransportwagen
- 29 -: Zugband
- 30 -: Koppelglied
- 31 -: Öse
- 32 -: Sammelplatte
- 33 -: Rolle
- 34 -: Dicke
- 35 -: Seitenbürste
- 36 -: Unterseite zu 6
- 37 -: Rollenführung
- 38 -: Längsseite
- 39 -: Durchfahrgasse
- 40 -: Innenbreite
- 42 -: Profil
- 43 -: Hohlraum
- 44 -: Quersteg
- 45 -: Oberseite
- 46 -: Höhe zu 16
- 47 -: Abstand
- 48 -: Verstärkungsprofil
- 49 -: Sammelplattenhalter

- 107 -: Deckplatte
- 108 -: Pflückarm
- 109 -: Sauggreifvorrichtung / Greifeinrichtung
- 122 -: Basisplatte
- 123 -: Konsole
- 125 -: Gelenk
- 126 -: Gelenk
- 127 -: Stab
- 128 -: Stab
- 129 -: Drehlager / Lager
- 130 -: Bolzen
- 131 -: Finger
- 132 -: Abstandssensor
- 133 -: Sensor
- 134 -: Polster
- 169 -: Teilabschnitt
- 170 -: Teilabschnitt
- 171 -: Basisplatte
- 172 -: Druckluftzylinder
- 173 -: Druckluftzylinder
- 174 -: Kunststoffrohr
- 175 -: Stabilisierungsplatte
- 176 -: Saugeinrichtung

- g -: Erdanziehung
- D -: Deckelband
- H -: Horizontalrichtung
- O -: oberer Bereich
- U -: unterer Bereich
- V -: Vertikalrichtung
- α -: Winkel
- β -: Winkel

## Patentansprüche

1. Pflückwagensystem zur Obsternte, insbesondere Apfelernte, wobei der Pflückwagen (1) ein fahrbares Gestell (2) aufweist, auf dem ein Förderband (6) montiert ist und geerntetes Obstgut mit dem Förderband (6) zu einer Sammelstelle gefördert wird, **dadurch gekennzeichnet, dass** unterhalb des Pflückwagens eine Durchfahrgasse (39) ausgebildet ist, wobei in der Durchfahrgasse (39) ein Straßentransportwagen (27) angeordnet ist und auf dem Straßentransportwagen (27) Sammelkisten (11) angeordnet sind, wobei das Obstgut von dem Förderband (6) in die Sammelkisten (11) gefördert wird.

2. Pflückwagensystem nach Anspruch 1, **dadurch gekennzeichnet, dass** das Förderband (6) von einer Horizontalrichtung (H) kommend auf die Vertikalrichtung (V) bezogen nach unten umgelenkt ist, so dass das geförderte Obstgut in eine auf dem Straßentransportwagen (27) angeordnete Sammelkiste (11) gefördert wird oder dass ein in der Höhe verstellbarer Vertikalförderer das Obstgut von dem Förderband in die Sammelkiste (11) befördert.

3. Pflückwagensystem nach einem der Ansprüche 1 oder 2, **dadurch gekennzeichnet, dass** seitlich an dem Pflückwagen (1) Pflückplattformen (20) für menschliche Pflücker (24) angeordnet sind oder dass automatische Pflückarme (108) auf dem Pflückwagen (1) angeordnet sind.

4. Pflückwagensystem nach einem der Ansprüche 1 bis 3, **dadurch gekennzeichnet, dass** die Pflückplattform (20) und/oder das Förderband (6) und/oder ein Gestell (2) des Pflückwagens (1) relativ in der Höhe verstellbar ausgebildet sind.

5. Pflückwagensystem nach einem der Ansprüche 1 bis 4, **dadurch gekennzeichnet, dass** der Pflückwagen (1) selbstfahrend ausgebildet ist oder dass der Pflückwagen (1) von einem Traktor (5) gezogen wird.

6. Pflückwagensystem nach einem der Ansprüche 1 bis 5, **dadurch gekennzeichnet, dass** der Straßentransportwagen (27) lösbar mit dem Pflückwagen (1) gekoppelt ist, insbesondere über eine Klemmvorrichtung.

7. Pflückwagensystem nach einem der Ansprüche 1 bis 6, **dadurch gekennzeichnet, dass** der Straßentransportwagen (27) von einem Traktor (5) gezogen ist.

8. Pflückwagensystem nach Anspruch 7, **dadurch gekennzeichnet, dass** der Pflückwagen (1) an den Straßentransportwagen (27) gekoppelt ist, so dass der Pflückwagen (1) von dem Straßentransportwagen (27) mitgezogen wird.

9. Pflückwagensystem nach einem der Ansprüche 1 bis 8, **dadurch gekennzeichnet, dass** die Durchfahrgasse (39) derart ausgebildet ist, dass ein Traktor (5) hindurchfahren kann.

10. Pflückwagensystem nach einem der Ansprüche 1 bis 9, **dadurch gekennzeichnet, dass** seitlich des Förderbandes (6) mindestens eine Sammelplatte (32) in einem Winkel (α) zum Förderband (6) angeordnet ist, wobei auf der Sammelplatte (32) Bürstenleisten (16) angeordnet sind, die eine zielgerichtete und/oder verlangsamende Lenkung des auf der Sammelplatte (32) abgelegten Obstes in Richtung zu dem Förderband (6) vornehmen.

## Claims

1. Picking truck system for fruit harvesting, in particular apple harvesting, wherein the picking truck (1) has a movable frame (2) on which a conveyor belt (6) is mounted and harvested fruit is conveyed by the conveyor belt (6) to a collection point, **characterised in that** a through passage (39) is formed below the picking truck, wherein a road transport truck (27) is arranged in the through passage (39) and collection boxes (11) are arranged on the road transport truck (27), and wherein the fruit is conveyed from the conveyor belt (6) into the collection boxes (11).

2. Picking truck system according to claim 1, **characterised in that** the conveyor belt (6), coming from a horizontal direction (H), is diverted downwards in relation to the vertical direction (V), such that the fruit being conveyed is conveyed into a collection box (11) arranged on the road transport truck (27) or that a height-adjustable vertical conveyor conveys the fruit from the conveyor belt into the collection box (11).

3. Picking truck system according to either one of claims 1 or 2, **characterised in that** picking platforms (20) for human pickers (24) are arranged on the side of the picking truck (1) or that automatic picking arms (108) are arranged on the picking truck (1).

4. Picking truck system according to any one of claims 1 to 3, **characterised in that** the picking platform (20) and/or the conveyor belt (6) and/or a frame (2) of the picking truck (1) are configured to be relatively height-adjustable.

5. Picking truck system according to any one of claims 1 to 4, **characterised in that** the picking truck (1) is configured to be self-driving or that the picking truck (1) is pulled by a tractor (5).

6. Picking truck system according to any one of claims 1 to 5, **characterised in that** the road transport truck (27) is coupled detachably with the picking truck (1), in particular by way of a clamping device.

7. Picking truck system according to any one of claims 1 to 6, **characterised in that** the road transport truck (27) is pulled by a tractor (5).

8. Picking truck system according to claim 7, **characterised in that** the picking truck (1) is coupled onto the road transport truck (27), such that the picking truck (1) is also pulled along by the road transport truck (27).

9. Picking truck system according to any one of claims 1 to 8, **characterised in that** the through passage (39) is configured in such a way that a tractor (5) can pass through it.

10. Picking truck system according to any one of claims 1 to 9, **characterised in that** at least one collection plate (32) is arranged to the side of the conveyor belt (6) at an angle (α) to the conveyor belt (6), brush strips (16) being arranged on the collection plate (32), said brush strips steering fruit put down on the collection plate (32) towards the conveyor belt (6) in a targeted and/or decelerating manner.

## Revendications

1. Système de chariot de cueillette pour la récolte de fruits, en particulier pour la récolte de pommes, dans lequel le chariot de cueillette (1) inclut un châssis mobile (2) sur lequel une bande transporteuse (6) est montée et des fruits récoltés sont transportés avec la bande transporteuse (6) jusqu'à un point de collecte, **caractérisé en ce qu'**une ruelle de passage (39) est réalisée sous le chariot de cueillette, dans lequel un véhicule de transport routier (27) est agencé dans la ruelle de passage (39) et des caisses de collecte (11) sont agencées sur le véhicule de transport routier (27), dans lequel les fruits récoltés sont transportés par la bande transporteuse (6) jusque dans les caisses de collecte (11).

2. Système de chariot de cueillette selon la revendication 1, **caractérisé en ce que** la bande transporteuse (6) est déviée d'une direction horizontale (H) dans la direction verticale (V) vers le bas de telle sorte que les fruits récoltés transportés sont transportés dans une caisse de collecte (11) agencée sur le véhicule de transport routier (27) ou qu'un élévateur déplaçable en hauteur transporte les fruits récoltés de la bande transporteuse jusque dans la caisse de collecte (11).

3. Système de chariot de collecte selon l'une quelconque des revendications 1 ou 2, **caractérisé en ce que** des plateformes de cueillette (20) destinées à des cueilleurs humains (24) sont agencées latéralement au niveau du chariot de cueillette (1) ou **en ce que** des bras cueilleurs automatiques (108) sont agencés sur le chariot de cueillette (1).

4. Système de cueillette selon l'une quelconque des revendications 1 à 3, **caractérisé en ce que** la plateforme de cueillette (20) et/ou la bande transporteuse (6) et/ou un châssis (2) du chariot de cueillette (1) sont réalisés déplaçables relativement en hauteur.

5. Système de chariot de cueillette selon l'une quelconque des revendications 1 à 4, **caractérisé en ce que** le chariot de cueillette (1) est réalisé comme un engin automoteur ou **en ce que** le chariot de cueillette (1) est tiré par un tracteur (5).

6. Système de chariot de cueillette selon l'une quelconque des revendications 1 à 5, **caractérisé en ce que** le véhicule de transport routier (27) est accouplé de manière amovible au chariot de cueillette (1), en particulier par l'intermédiaire d'une attache.

7. Système de chariot de cueillette selon l'une quelconque des revendications 1 à 6, **caractérisé en ce que** le véhicule de transport routier (27) est tiré par un tracteur (5).

8. Système de chariot de cueillette selon la revendication 7, **caractérisé en ce que** le chariot de cueillette (1) est accouplé au véhicule de transport routier (27) de telle sorte que le chariot de cueillette (1) est emporté par le véhicule de transport routier (27).

9. Système de chariot de cueillette selon l'une quelconque des revendications 1 à 8, **caractérisé en ce que** la ruelle de passage (39) est réalisée de telle sorte qu'un tracteur (5) peut y passer.

10. Système de chariot de cueillette selon l'une quelconque des revendications 1 à 9, **caractérisé en ce que** sur le côté de la bande transporteuse (6) est agencée au moins une plaque de collecte (32) avec un angle (α) par rapport à la bande transporteuse (6), dans lequel des barres de brosses (16) sont agencées sur la plaque de collecte (32) et effectuent un guidage ciblé et/ou ralentissant des fruits déposés sur la plaque de collecte (32) en direction de la bande transporteuse (6).
